# EUROPEAN PATENT SPECIFICATION

(11) **EP 3 812 606 B1**
(45) Date of publication and mention of the grant of the patent: **28.01.2026**
(21) Application number: 19821776.2
(22) Date of filing: 20.06.2019
(51) Int. Cl.: F16D 65/092, B62L 1/00, F16D 55/228, F16D 65/02

(54) **DISC BRAKE AND CALIPER**
SCHEIBENBREMSE UND BREMSSATTEL
FREIN À DISQUE ET ÉTRIER

(30) Priority: 20.06.2018 JP 2018116902
(43) Date of publication of application: 28.04.2021
(73) Proprietor: Astemo, Ltd., Tokyo 100-0004 (JP)
(72) Inventor: AMEMIYA Takeo, Hitachinaka-shi, Ibaraki 312-8503 (JP); IWAHASHI Yoshiki, Hitachinaka-shi, Ibaraki 312-8503 (JP)
(74) Representative: Hoffmann Eitle
(86) International application number: PCT/JP2019/024401
(87) International publication number: WO 2019/244960

(56) References cited:
- WO-A1-2005/064194
- GB-A- 2 024 348
- JP-A- 2002 276 700
- JP-A- 2013 072 501
- JP-A- H03 103 631
- JP-A- H08 511 081
- JP-A- S55 163 336
- JP-U- H01 163 226
- JP-U- S5 699 132
- US-A- 5 860 495
- US-A1- 2014 196 993

## Description

### [Technical Field]

The present invention relates to a disc brake and a caliper for braking vehicles such as motorcycles and four-wheeled vehicles.

Priority is claimed on Japanese Patent Application No. 2018-116902 filed in Japan on June 20, 2018.

### [Background Art]

Japanese Unexamined Patent Application, First Publication No. 2014-173623 discloses a disc brake having a structure in which an extended part extending in a longitudinal direction of a friction pad is formed on an end portion side in a disc rotation direction and an outer side in a disc radial direction of the friction pad, and the extended part is supported by a caliper main body. US 5860495 A discloses a floating caliper disk brake for automotive vehicles. A leaf spring disposed on an outer brake pad of the brake fixes the pad to the caliper. This spring also serves to radially prestress the floating caliper vis-à-vis carrier arms of the brake, thereby eliminating the need for an additional spring that was previously provided for this purpose.

Other examples of disk brakes are shown in WO 2005/064194 A1, GB 2 024 348 A and US 2014/196993 A1.

### [Summary of Invention]

### [Technical Problem]

In a disc brake, cost reduction is required.

An objective of the present invention is to provide a disc brake and a caliper in which costs can be reduced.

### [Solution to Problem]

In a first aspect of the present invention, there is provided a disk brake according to claim 1.

### [deleted]

### [Advantageous Effects of Invention]

According to the disc brake of the present invention, it is possible to reduce costs.

### [Brief Description of Drawings]

FIG. 1 is a view of a disc brake from outside in a disc radial direction.
FIG. 2 is a view taken in a direction of arrow II of FIG. 1 showing the disc brake.
FIG. 3 is a view taken in a direction of arrow III of FIG. 1 showing the disc brake.
FIG. 4 is a view of the disc brake from inside in the disc radial direction.
FIG. 5 is a cross-sectional view taken along line V-V of FIG. 1 showing the disc brake.
FIG. 6 is a cross-sectional view of a main part showing the disc brake.
FIG. 7 is a perspective view of a main part showing the disc brake.
FIG. 8 is a view of a main part of the disc brake from outside in the disc radial direction except for a pad spring.
FIG. 9 is a view of a modified example of a main part of the disc brake from outside in the disc radial direction except for the pad spring.
FIG. 10 is a front view showing a disc brake of a second design.
FIG. 11 is a view of the disc brake of the second design from outside in a disc radial direction.
FIG. 12 is a perspective view showing a disc, a bracket, and a pair of friction pads of the disc brake of the second design.
FIG. 13 is a view of a disc brake of a third design from outside in a disc radial direction.
FIG. 14 is a view of the disc brake of the third design from inside in the disc radial direction.
FIG. 15 is a cross-sectional view taken along line XV-XV of FIG. 13 showing the disc brake of the third design.
FIG. 16 is a cross-sectional view showing a main part of a modified example of the disc brake of FIG. 1.

### [Description of Embodiments]

### [First Example]

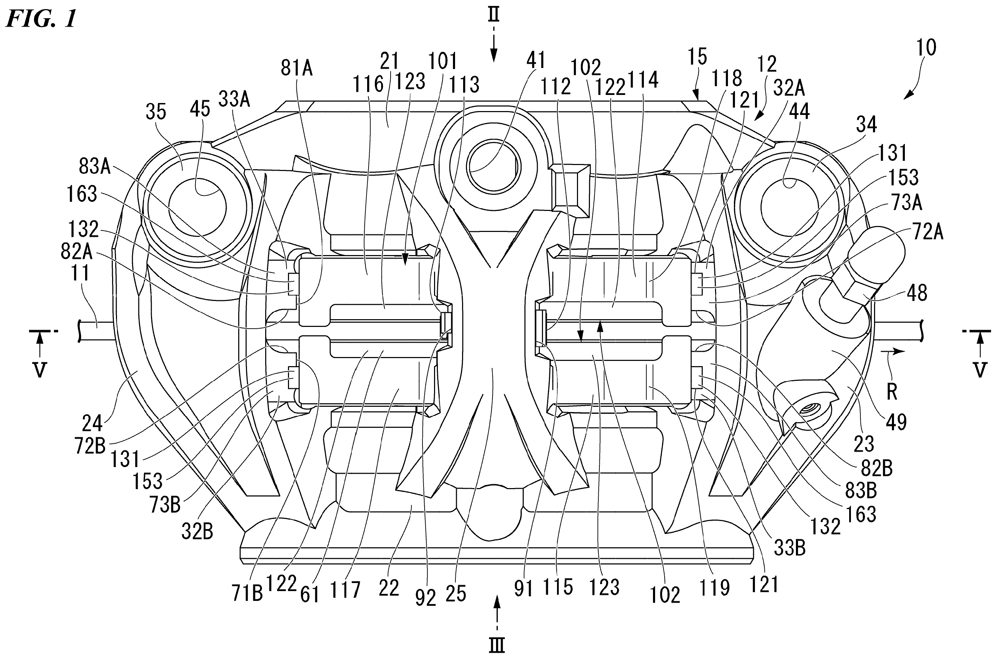

A first Example will be described with reference to FIGS. 1 to 9. A disc brake 10 of the first example is an opposed piston type disc brake for front wheel braking of motorcycles. Further, the present invention is not limited thereto, and can also be applied to, for example, disc brakes for rear wheel braking of motorcycles and braking of four-wheeled vehicles as a matter of course.

As shown in FIGS. 1 to 5, the disc brake 10 includes a disc rotor 11 that rotates together with a wheel to be braked, and a caliper 12 attached to a vehicle body side and configured to apply frictional resistance to the disc rotor 11. Hereinafter, a radial direction in the disc rotor 11 is referred to as a disc radial direction, a central axis of the disc rotor 11 is referred to as a disc axis, a direction in which the disc axis extends is referred to as a disc axial direction, and a rotation direction (circumferential direction) of the disc rotor 11 is referred to as a disc rotation direction. Also, a center side of the disc rotor 11 in the disc radial direction is referred to as an inner side in the disc radial direction, and a side opposite to the center of the disc rotor 11 in the disc radial direction is referred to as an outer side in the disc radial direction.

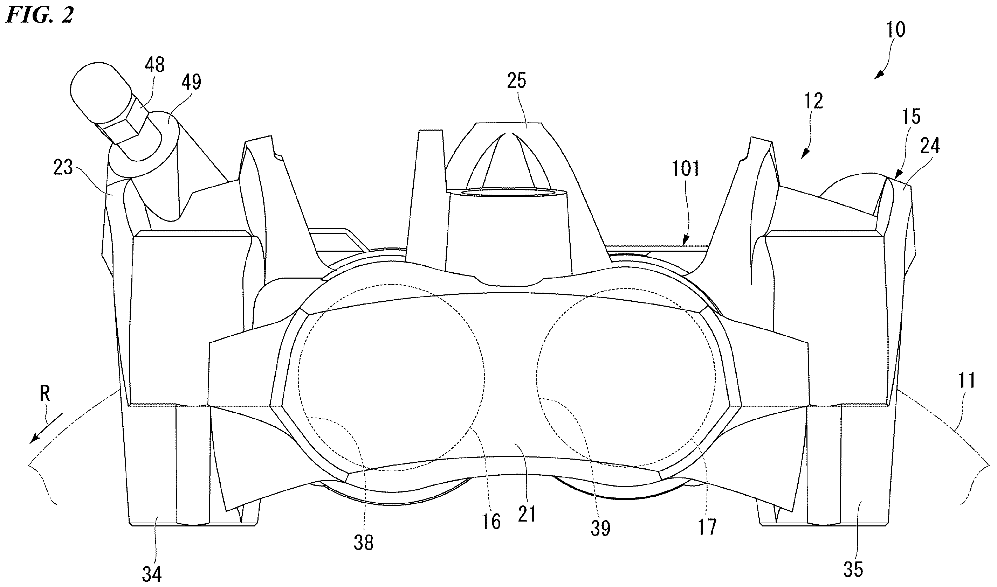

The caliper 12 includes a caliper main body 15 (supporting member) disposed across an outer circumferential side of the disc rotor 11 and fixed to the vehicle body side as shown in FIGS. 1 to 3, and a pair of pistons 16 (pressing members) of the same shape accommodated in the caliper main body 15 as shown in FIGS. 2 to 4, and a pair of pistons 17 (pressing members) of the same shape having smaller diameters than those of the pistons 16 and accommodated in the caliper main body 15. In the first example, a line in the disc radial direction through the disc axis of the disc rotor 11 and a center of the caliper main body 15 in the disc rotation direction is referred to as a first radial reference line, and a direction in which the first radial reference line extends is referred to as a first reference line direction. The first radial reference line is perpendicular to the disc axis.

In the caliper 12, the pair of pistons 16, which are common parts, are provided in pairs on both sides of the disc rotor 11 in the disc axial direction to be aligned in the disc radial direction and the disc rotation direction. Also, the pair of pistons 17, which are common parts, are provided in pairs on both sides of the disc rotor 11 in the disc axial direction to be aligned in the disc radial direction and the disc rotation direction. In other words, one piston 16 and one piston 17 are provided to be aligned in the disc rotation direction with a predetermined distance therebetween on one side of the disc rotor 11 in the disc axial direction, and such a configuration is provided on both sides in the disc axial direction. Therefore, the caliper 12 is an opposed piston type four-pot caliper. Further, the number of pistons may be at least one pair with the disc rotor 11 interposed therebetween and may also be three or four pairs in addition to the above-described two pairs. Further, the number of pistons may be different on both sides of the disc rotor 11 in the disc axial direction such as one and two or two and three.

As shown in FIG. 1, the caliper main body 15 includes a cylinder part 21 disposed on an outer side of the disc rotor 11 in the disc axial direction (on a side opposite to the wheel with respect to the disc rotor 11), and a cylinder part 22 disposed on an inner side (on the wheel side with respect to the disc rotor 11) of the disc rotor 11. Also, the caliper main body 15 includes an end side connection part 23 (connection part) that connects one end portions of the cylinder part 21 and the cylinder part 22 in the disc rotation direction, an end side connection part 24 (connection part) that connects the other end portions of the cylinder part 21 and the cylinder part 22 in the disc rotation direction, and an intermediate connection part 25 that connects intermediate portions of the cylinder part 21 and the cylinder part 22 in the disc rotation direction. The end side connection part 23, the end side connection part 24, and the intermediate connection part 25 are all disposed to cross the disc rotor 11 on an outer side in the disc radial direction. In other words, the caliper main body 15 includes a pair of end side connection parts 23 and 24 that connect a pair of cylinder parts 21 and 22 across the disc rotor 11 at end portions of the pair of cylinder parts 21 and 22 in the disc rotation direction.

The caliper main body 15 is a monoblock caliper in which the cylinder part 21, the cylinder part 22, the end side connection part 23, the end side connection part 24, and the intermediate connection part 25 are formed of an integral cast material. Therefore, the cylinder part 21 and the cylinder part 22 are integrally formed via the end side connection part 23, the end side connection part 24, and the intermediate connection part 25.

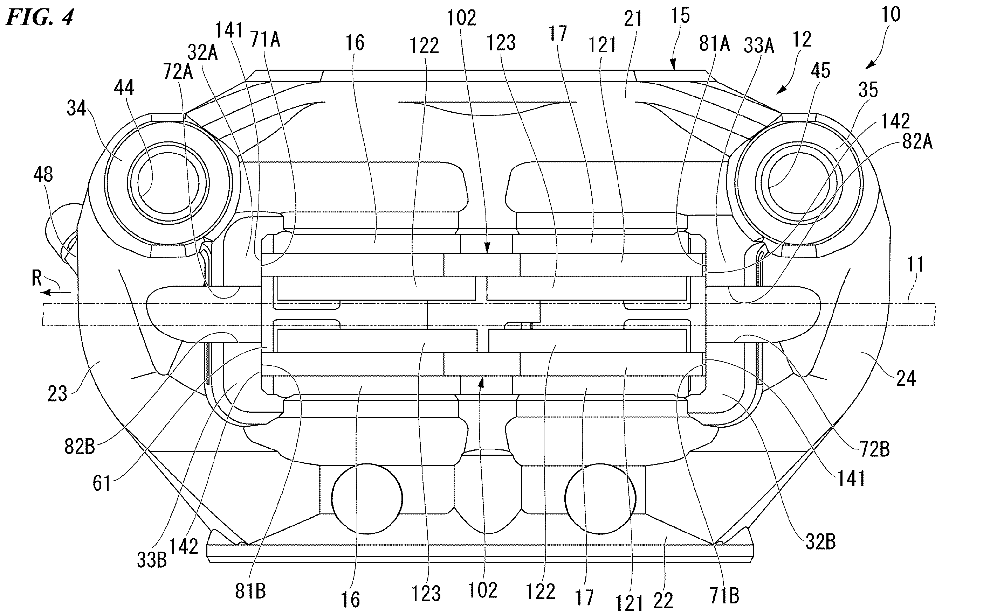

As shown in FIG. 4, the cylinder part 21 on the outer side is disposed to face a surface on an outer side of the disc rotor 11. The cylinder part 21 on the outer side includes a mounting boss part 34 disposed on the end side connection part 23 side which is one end in the disc rotation direction, and a mounting boss part 35 disposed on the end side connection part 24 side which is the other end in the disc rotation direction.

The cylinder part 21 has a shape longer in the disc rotation direction to accommodate a plurality of pistons 16 and 17 which are aligned in the disc rotation direction. As shown in FIG. 2, in the cylinder part 21, two cylinder bores 38 and 39 that accommodate the pistons 16 and 17 to be movable in the disc axial direction are formed to be aligned in the disc rotation direction. Of the cylinder bores 38 and 39, a large diameter cylinder bore 38 accommodating a large diameter piston 16 is disposed on the end side connection part 23 side in the disc rotation direction. Also, of the cylinder bores 38 and 39, a small diameter cylinder bore 39 accommodating a small diameter piston 17 is disposed on the end side connection part 24 side in the disc rotation direction. The cylinder bores 38 and 39 open to the disc rotor 11 side in the disc axial direction.

As shown in FIG. 1, a supply/discharge port 41 for supplying/discharging a brake fluid to the cylinder bores 38 and 39 is formed at a center position of the cylinder part 21 in the disc rotation direction. The supply/discharge port 41 is formed parallel to the first radial reference line.

A mounting hole 44 and a mounting hole 45 are respectively formed to penetrate the mounting boss part 34 and the mounting boss part 35 in the disc radial direction. These mounting holes 44 and 45 are parallel to the first radial reference line. These mounting holes 44 and 45 are formed to be aligned with each other in the disc axial direction at equidistant positions from the center of the caliper main body 15 in the disc rotation direction. The caliper 12 is a so-called radial mount type in which the caliper 12 is fixed to the vehicle body side using mounting bolts (not shown) inserted into these mounting holes 44 and 45.

A bleeder boss part 49 to which a bleeder plug 48 for bleeding air is attached is formed on the end side connection part 23. The caliper main body 15 is disposed on a rear side of the disc rotor 11 in a vehicle front-rear direction with the end side connection part 23 on which the bleeder boss part 49 is formed disposed on an upper side in a vertical direction. Therefore, when the vehicle travels forward, the disc rotor 11 moves upward from below in the vertical direction with respect to the caliper main body 15. In the caliper main body 15, the end side connection part 23 on one side on which the bleeder boss part 49 is disposed is disposed on a forward disc rotation exit side which is an exit side of the disc rotor 11 in a rotation direction R when the vehicle travels forward. In the caliper main body 15, the end side connection part 24 on the other side is disposed on a forward disc rotation entry side which is an entry side of the disc rotor 11 in the rotation direction R when the vehicle travels forward.

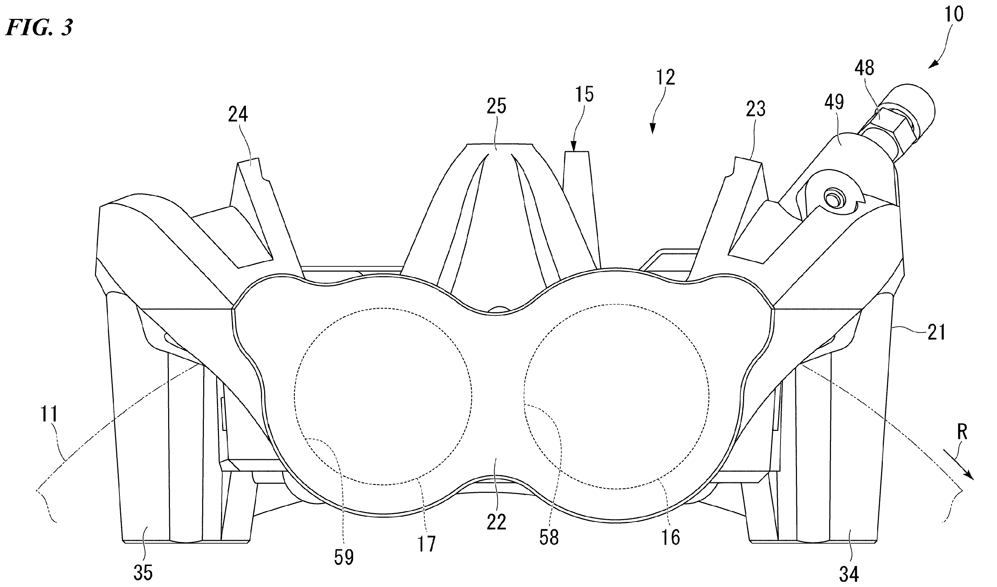

As shown in FIG. 4, the cylinder part 22 on the inner side is disposed to face a surface on an inner side of the disc rotor 11. As shown in FIG. 3, the cylinder part 22 on the inner side has a shape longer in the disc rotation direction to accommodate the plurality of pistons 16 and 17 which are aligned in the disc rotation direction. In the cylinder part 22, two cylinder bores 58 and 59 that accommodate the pistons 16 and 17 to be movable in the disc axial direction are formed to be aligned in the disc rotation direction. Of the cylinder bores 58 and 59, a large diameter cylinder bore 58 accommodating a large diameter piston 16 is disposed on the end side connection part 23 side in the disc rotation direction. Of the cylinder bores 58 and 59, a small diameter cylinder bore 59 accommodating a small diameter piston 17 is disposed on the end side connection part 24 side in the disc rotation direction. The cylinder bores 58 and 59 open to the disc rotor 11 side in the disc axial direction. The supply/discharge port 41 of the cylinder part 21 on the outer side shown in FIG. 1 supplies/discharges the brake fluid to the cylinder bores 38 and 39 of the cylinder part 21 shown in FIG. 2. In addition, the supply/discharge port 41 supplies/discharges the brake fluid also to the cylinder bores 58 and 59 of the cylinder part 22 shown in FIG. 3.

In the caliper main body 15, the cylinder part 21 shown in FIGS. 1 and 2 and the cylinder part 22 shown in FIGS. 1 and 3 are disposed to face in the disc axial direction while positions thereof in the disc rotation direction and the disc radial direction are aligned to be superimposed on each other. The cylinder bore 58 is formed coaxially with the cylinder bore 38, and the cylinder bore 59 is formed coaxially with the cylinder bore 39.

As shown in FIG. 1, the end side connection part 23 includes a pad support part 32A and a pad support part 33B on the end side connection part 24 side in the disc rotation direction. The pad support part 32A is disposed on the outer side of the disc rotor 11, and the pad support part 33B is disposed on the inner side of the disc rotor 11. The end side connection part 24 includes a pad support part 32B and a pad support part 33A on the end side connection part 23 side in the disc rotation direction. The pad support part 33A is disposed on the outer side of the disc rotor 11, and the pad support part 32B is disposed on the inner side of the disc rotor 11. Therefore, the end side connection part 23 includes the pad support parts 32A and 33B on both sides of the disc rotor 11 in the disc axial direction. The end side connection part 24 includes the pad support parts 32B and 33A on both sides of the disc rotor 11 in the disc axial direction. In other words, the pad support parts 32A, 33B, 32B, and 33A are provided in the end side connection parts 23 and 24. In the caliper main body 15, the pad support parts 32A and 33B are disposed on the forward disc rotation exit side. In the caliper main body 15, the pad support parts 32B and 33A are disposed on the forward disc rotation entry side.

The pad support part 32A and the pad support part 33B shown in FIGS. 1 and 4 are disposed to face in the disc axial direction while positions thereof in the disc rotation direction and the disc radial direction are aligned to be superimposed on each other. Also, the pad support part 33A and the pad support part 32B are disposed to face in the disc axial direction while positions thereof in the disc rotation direction and the disc radial direction are aligned to be superimposed on each other. As shown in FIG. 4, the disc rotor 11 is disposed between: the pad support parts 32A and 33A; and the pad support parts 32B and 33B. The pair of end side connection parts 23 and 24 connect the pair of cylinder parts 21 and 22 across the disc rotor 11 at end portions of the pair of cylinder parts 21 and 22 in the disc rotation direction.

A pad disposition space 61 that opens to both sides in the disc radial direction is formed substantially at a center of the caliper main body 15 surrounded by the cylinder parts 21 and 22 and the pad support parts 32A, 32B, 33A, and 33B. The entire pad disposition space 61 opens to an inner side in the disc radial direction. As shown in FIG. 1, the intermediate connection part 25 is provided at a center position of the caliper main body 15 in the disc rotation direction. The intermediate connection part 25 is provided across the pad disposition space 61 in the disc axial direction on the outer side in the disc radial direction. Therefore, the outer side in the disc radial direction of the pad disposition space 61 opens at a portion between the pad support parts 32A and 33B on one side in the disc rotation direction and the intermediate connection part 25, and at a portion between the pad support parts 33A and 32B on the opposite side in the disc rotation direction and the intermediate connection part 25. The cylinder bores 38, 39, 58, and 59 shown in FIGS. 2 and 3 open to the pad disposition space 61 shown in FIG. 4. The disc rotor 11 traverses a center position in the disc axial direction of the pad disposition space 61 in the disc rotation direction.

Here, in the caliper main body 15, the cylinder part 21, the cylinder part 22, the end side connection part 23, the end side connection part 24, and the intermediate connection part 25 shown in FIG. 1 are integrally formed by casting except for bottom portions of the cylinder bores 58 and 59 of the cylinder part 22 shown in FIG. 3. Then, cutting work is performed on inner surfaces of the cylinder bores 38, 39, 58, and 59 via openings formed by casting at the bottom portions of the two cylinder bores 58 and 59 of the cylinder part 22. Thereafter, the caliper main body 15 is formed by joining a separate closing member to the openings at the bottom portions of the cylinder bores 58 and 59 of the cylinder part 22 by friction stir welding to close the openings and form the bottom portions. Further, this may also be achieved by integrally forming the whole of the cylinder part 21, the cylinder part 22, the end side connection part 23, the end side connection part 24, and the intermediate connection part 25 by casting, and performing cutting work on the inner surfaces of the cylinder bores 38, 39, 58, and 59 via the pad disposition space 61 between the cylinder parts 21 and 22.

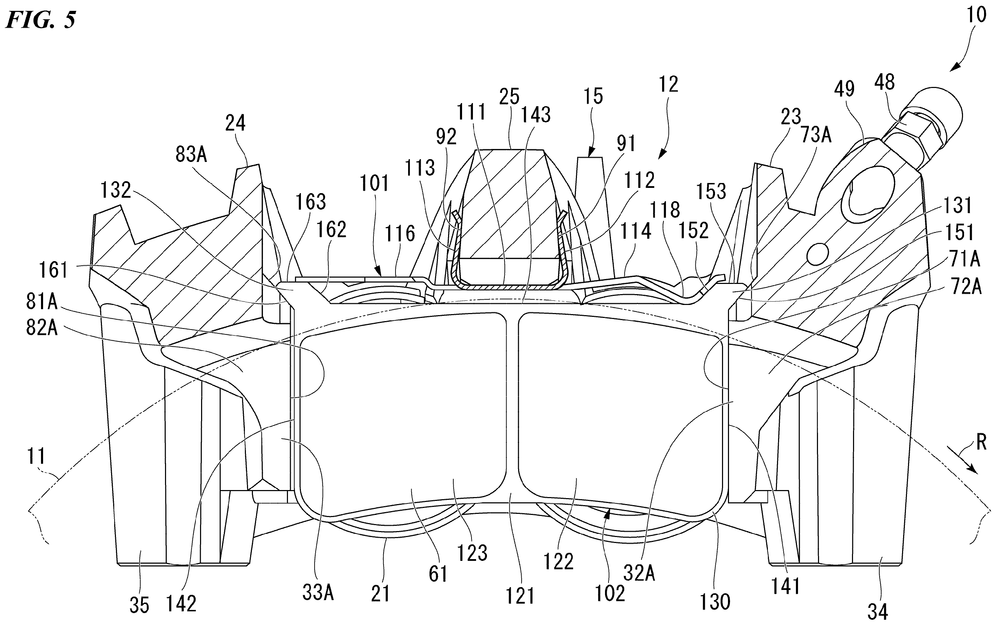

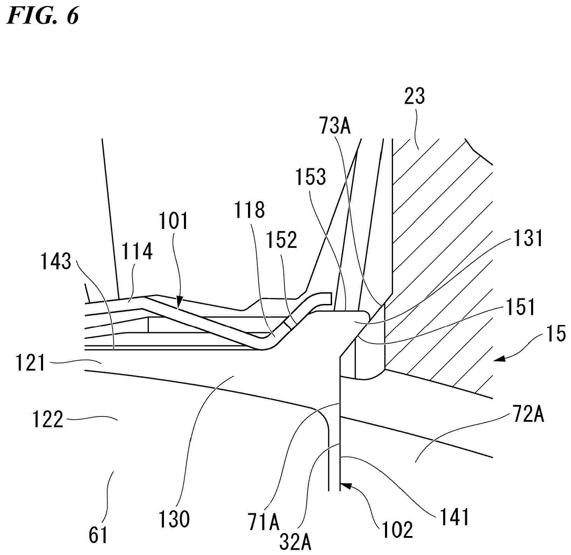

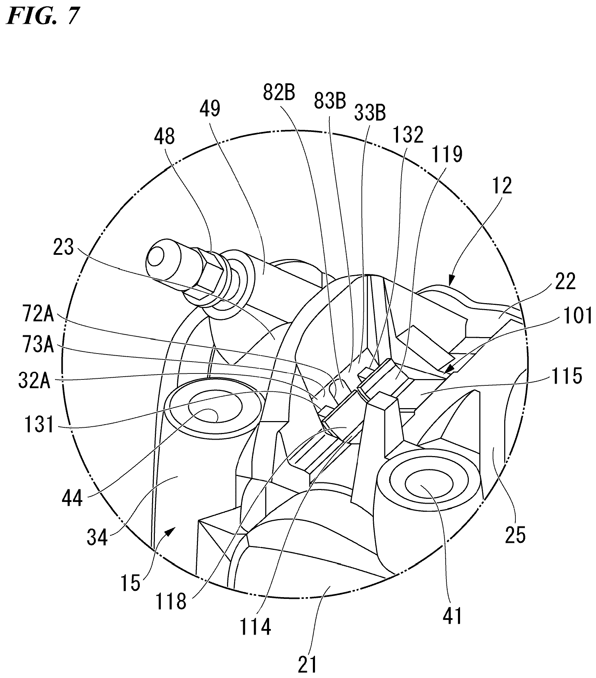

As shown in FIGS. 5 and 6, a torque receiving surface 71A facing the pad disposition space 61 side, a rotor facing surface 72A facing the disc rotor 11 side, and a flat surface portion 73A facing outward in the disc radial direction are formed on the outer pad support part 32A of the end side connection part 23 on the forward disc rotation exit side. The torque receiving surface 71A is a flat surface extending parallel to the first radial reference line. The torque receiving surface 71A also extends parallel to the disc axis. The rotor facing surface 72A extends perpendicular to the disc axis. The flat surface portion 73A is a flat surface extending parallel to the disc axis. As shown also in FIG. 7, in the first reference line direction, the flat surface portion 73A is inclined to become further away from the first radial reference line outward in the disc radial direction. The flat surface portion 73A is inclined in a direction away from a center of the caliper 12 in a rotor rotation direction outward in the disc radial direction. As shown in FIGS. 5 and 6, the flat surface portion 73A and the torque receiving surface 71A form an obtuse angle. The flat surface portion 73A and the torque receiving surface 71A are not limited to having an obtuse angle and may have an acute angle.

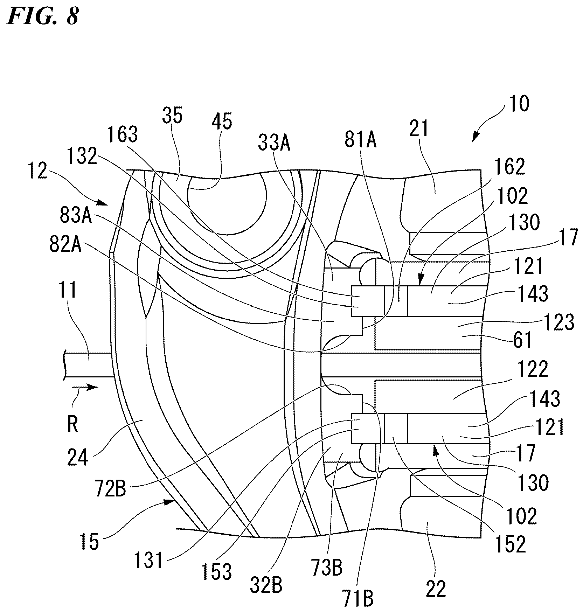

As shown in FIGS. 5 and 8, a torque receiving surface 81A facing the pad disposition space 61 side, a rotor facing surface 82A facing the disc rotor 11 side, and a flat surface portion 83A facing outward in the disc radial direction are formed on the outer pad support part 33A of the end side connection part 24 on the forward disc rotation entry side. The torque receiving surface 81A is a flat surface extending parallel to the first radial reference line. The torque receiving surface 81A also extends parallel to the disc axis. The rotor facing surface 82A extends perpendicular to the disc axis. As shown in FIG. 4, the rotor facing surface 82A is disposed on the same plane as the rotor facing surface 72A. As shown in FIGS. 5 and 8, the flat surface portion 83A is a flat surface extending parallel to the disc axis. As shown in FIG. 5, in the first reference line direction, the flat surface portion 83A is inclined to become further away from the first radial reference line outward in the disc radial direction. The flat surface portion 83A is inclined in a direction away from the center of the caliper 12 in the rotor rotation direction outward in the disc radial direction. The flat surface portion 83A and the torque receiving surface 81A form an obtuse angle. The angle formed by the flat surface portion 83A and the torque receiving surface 81A is equivalent to an angle formed by the flat surface portion 73A and the torque receiving surface 71A. The flat surface portion 83A and the torque receiving surface 81A are not limited to having an obtuse angle and may have an acute angle. A line connecting a boundary position between the flat surface portion 73A and the torque receiving surface 71A to a boundary position between the flat surface portion 83A and the torque receiving surface 81A is parallel to a line connecting the torque receiving surface 71A and the torque receiving surface 81A perpendicularly to each other. Therefore, the boundary position between the flat surface portion 73A and the torque receiving surface 71A is aligned with the boundary position between the flat surface portion 83A and the torque receiving surface 81A in the disc radial direction. In other words, an inner end position of the flat surface portion 73A in the disc radial direction and an inner end position of the flat surface portion 83A in the disc radial direction are aligned in the disc radial direction. In yet other words, a length of a line connecting the inner end position of the flat surface portion 73A in the disc radial direction to the central axis of the disc rotor 11 is equivalent to a length of a line connecting the inner end position of the flat surface portion 83A in the disc radial direction to the central axis of the disc rotor 11.

As shown in FIG. 4, a torque receiving surface 81B facing the pad disposition space 61 side and a rotor facing surface 82B facing the disc rotor 11 are formed in the inner pad support part 33B of the end side connection part 23 on the forward disc rotation exit side. As shown in FIG. 1, a flat surface portion 83B facing outward in the disc radial direction is formed on the pad support part 33B. The torque receiving surface 81B shown in FIG. 4 is a flat surface extending parallel to the first radial reference line. The torque receiving surface 81B also extends parallel to the disc axis. The torque receiving surface 81B is disposed on the same plane as the torque receiving surface 71A. The rotor facing surface 82B extends perpendicular to the disc axis. The flat surface portion 83B shown in FIG. 1 is a flat surface extending parallel to the disc axis. As shown in FIG. 7, in the first reference line direction, the flat surface portion 83B is inclined to become further away from the first radial reference line outward in the disc radial direction. The flat surface portion 83B is inclined in a direction away from the center of the caliper 12 in the rotor rotation direction outward in the disc radial direction. The flat surface portion 83B is disposed on the same plane as the flat surface portion 73A. The flat surface portion 83B and the torque receiving surface 81B that is shown in FIG. 4 form an obtuse angle. The angle formed by the flat surface portion 83B and the torque receiving surface 81B is equivalent to an angle formed by the flat surface portion 73A and the torque receiving surface 71A. The flat surface portion 83B and the torque receiving surface 81B are not limited to having an obtuse angle and may have an acute angle. The torque receiving surface 71A and the torque receiving surface 81A are parallel to each other. The torque receiving surface 71B and the torque receiving surface 81B are parallel to each other. A distance between the torque receiving surface 71A and the torque receiving surface 81Ais equivalent to a distance between the torque receiving surface 71B and the torque receiving surface 81B.

As shown in FIG. 4, a torque receiving surface 71B facing the pad disposition space 61 side and a rotor facing surface 72B facing the disc rotor 11 are formed in the inner pad support part 32B of the end side connection part 24 on the forward disc rotation entry side. As shown in FIGS. 1 and 8, a flat surface portion 73B facing outward in the disc radial direction is formed on the pad support part 32B. The torque receiving surface 71B shown in FIG. 4 is a flat surface extending parallel to the first radial reference line. The torque receiving surface 71B also extends parallel to the disc axis. The torque receiving surface 71B is disposed on the same plane as the torque receiving surface 81A. The rotor facing surface 72B extends perpendicular to the disc axis. The rotor facing surface 72B is disposed on the same plane as the rotor facing surface 82B. The flat surface portion 73B shown in FIGS. 1 and 8 is a flat surface extending parallel to the disc axis. In the first reference line direction, the flat surface portion 73B is inclined to become further away from the first radial reference line outward in the disc radial direction. The flat surface portion 73B is inclined in a direction away from the center of the caliper 12 in the rotor rotation direction outward in the disc radial direction. The flat surface portion 73B is disposed on the same plane as the flat surface portion 83A. The flat surface portion 73B and the torque receiving surface 71B form an obtuse angle. The angle formed by the flat surface portion 73B and the torque receiving surface 71B is equivalent to an angle formed by the flat surface portion 73A and the torque receiving surface 71A. The flat surface portion 73B and the torque receiving surface 71B are not limited to having an obtuse angle and may form an acute angle. A line connecting a boundary position between the flat surface portion 73B and the torque receiving surface 71B to a boundary position between the flat surface portion 83B and the torque receiving surface 81B is parallel to a line connecting the torque receiving surface 71B and the torque receiving surface 81B perpendicularly to each other. Therefore, the boundary position between the flat surface portion 73B and the torque receiving surface 71B is aligned with the boundary position between the flat surface portion 83B and the torque receiving surface 81B in the disc radial direction. These boundary positions are also aligned with the boundary position between the flat surface portion 73A and the torque receiving surface 71A and the boundary position between the flat surface portion 83A and the torque receiving surface 81A in the disc radial direction. In other words, an inner end position of the flat surface portion 73B in the disc radial direction and an inner end position of the flat surface portion 83B in the disc radial direction are aligned in the disc radial direction. In yet other words, a length of a line connecting the inner end position of the flat surface portion 73B in the disc radial direction to the central axis of the disc rotor 11 is equivalent to a length of a line connecting the inner end position of the flat surface portion 83B in the disc radial direction and the central axis of the disc rotor 11. These inner end positions are also aligned in the disc radial direction with the inner end position of the flat surface portion 73A in the disc radial direction and the inner end position of the flat surface portion 83A in the disc radial direction.

As shown in FIG. 1, an engaging recessed part 91 and an engaging recessed part 92 having different widths in the disc axial direction are formed in the intermediate connection part 25 on the forward disc rotation exit side and the forward disc rotation entry side. The engaging recessed part 91 on the forward disc rotation exit side is recessed from a wall surface of the intermediate connection part 25 on the forward disc rotation exit side toward the forward disc rotation entry side. The engaging recessed part 92 on the forward disc rotation entry side is recessed from a wall surface of the intermediate connection part 25 on the forward disc rotation entry side toward the forward disc rotation exit side. A width of the engaging recessed part 91 on the forward disc rotation exit side in the disc axial direction is larger than that of the engaging recessed part 92 on the forward disc rotation entry side.

A pad spring 101 is attached to the caliper main body 15 by being locked to the engaging recessed parts 91 and 92 of the intermediate connection part 25. The caliper main body 15 supports a pair of friction pads 102 and 102 having the same shape that are biased by the pad spring 101. These friction pads 102 are disposed to face the disc rotor 11. One friction pad 102 is disposed between the cylinder part 21 on the outer side and the disc rotor 11, and the other friction pad 102 is disposed between the cylinder part 22 on the inner side and the disc rotor 11.

The pad spring 101 is formed by press-forming a plate having a constant plate thickness by punching and bending the plate. The pad spring 101 includes a base plate 111, an engaging plate part 112, and an engaging plate part 113 shown in FIG. 5, and a pair of extended plate parts 114 and 115 and a pair of extended plate parts 116 and 117 shown in FIG. 1. The base plate 111 shown in FIG. 5 is disposed between the intermediate connection part 25 and the pair of friction pads 102 and is in contact with the intermediate connection part 25. The engaging plate part 112 extends outward in the disc radial direction from an end edge portion of the base plate 111 on the forward disc rotation exit side and engages with the engaging recessed part 91 of the intermediate connection part 25. The engaging plate part 113 extends outward in the disc radial direction from an end edge portion of the base plate 111 on the forward disc rotation entry side and engages with the engaging recessed part 92 of the intermediate connection part 25. Thereby, the engaging plate parts 112 and 113 sandwich the intermediate connection part 25. As a result, the pad spring 101 is attached to the caliper main body 15. Here, as shown in FIG. 1, the engaging plate part 112 on the forward disc rotation exit side is wider than the engaging plate part 113 on the forward disc rotation entry side in the disc axial direction. The engaging plate part 112 is configured such that its proper engagement with the engaging recessed parts 92, which has a narrower width between the engaging recessed parts 91 and 92 in the disc axial direction, is inhibited. Thereby, erroneous assembly in which the pad spring 101 is attached by reversing in the disc rotation direction is restricted.

The pair of extended plate parts 114 and 115 on the forward disc rotation exit side extend from the end edge portion of the base plate 111 on the forward disc rotation exit side to the forward disc rotation exit side. As shown in FIG. 5, a V-shaped bent part 118 protruding inward in the disc radial direction on the forward disc rotation exit side is formed on the extended plate part 114 on the outer side. Similarly, a V-shaped bent part 119 protruding inward in the disc radial direction on the forward disc rotation exit side is also formed on the extended plate part 115 on the inner side shown in FIG. 1. The extended plate parts 114 and 115 have a mirror-symmetrical shape. The extended plate parts 114 and 115 are disposed on both sides of the engaging plate part 112 in the disc axial direction.

The pair of extended plate parts 116 and 117 on the forward disc rotation entry side extend from the end edge portion of the base plate 111 on the forward disc rotation entry side to the forward disc rotation entry side. As shown in FIG. 5, the extended plate part 116 on the outer side has a stepped shape in which a predetermined range on the forward disc rotation entry side is positioned on an outer side in the disc radial direction with respect to a predetermined range on the forward disc rotation exit side. The extended plate part 117 on the inner side shown in FIG. 1 also has a similar stepped shape and has a mirror-symmetrical shape with respect to the extended plate part 116. The extended plate parts 116 and 117 are disposed on both sides of the engaging plate part 113 in the disc axial direction.

In the pad spring 101, the extended plate parts 114 and 116 on the outer side come into contact with the outer friction pad 102 and press it inward in the disc radial direction. At that time, as shown in FIG. 5, the extended plate part 114 on the forward disc rotation exit side comes into contact with the outer friction pad 102 at the bent part 118 and presses the friction pad 102 also to the forward disc rotation exit side. In the pad spring 101, the extended plate parts 115 and 117 on the inner side shown in FIG. 1 come into contact with the inner friction pad 102 and press it inward in the disc radial direction. At that time, the extended plate part 115 on the forward disc rotation exit side comes into contact with the inner friction pad 102 at the bent part 119 and presses the friction pad 102 also to the forward disc rotation exit side as well.

The pair of friction pads 102 are common parts having the same shape. As shown in FIG. 5, the friction pads 102 each include a back plate 121 which is long in the disc rotation direction, and lining materials 122 and 123 affixed to two places spaced apart from each other in a longitudinal direction on a surface on one side in the thickness direction of the back plate 121. The friction pad 102 is supported by the caliper 12 at the back plate 121. The friction pad 102 comes into contact with the disc rotor 11 via the lining materials 122 and 123 and applies a braking force to the vehicle.

The back plate 121 has a constant plate thickness. The back plate 121 includes a main plate part 130 to which the lining materials 122 and 123 are affixed, and a pair of an extended part 131 and an extended part 132 which extend to both outer sides in the disc rotation direction from both end portion sides in the disc rotation direction and an outer side in the disc radial direction of the main plate part 130. The main plate part 130 has substantially a rectangular shape that is long in the disc rotation direction. The extended part 131 and the extended part 132 extend in a direction inclined with respect to the longitudinal direction of the main plate part 130 from the both end portion sides of the main plate part 130 in the disc rotation direction which are on both sides thereof in the longitudinal direction. The longitudinal direction of the main plate part 130 is the longitudinal direction of the back plate 121 and the longitudinal direction of the friction pad 102. Therefore, the pair of extended parts 131 and 132 which extend in a direction inclined with respect to the longitudinal direction of the friction pad 102 are formed in the back plate 121 on both end portion sides in the disc rotation direction and an outer side in the disc radial direction. In the back plate 121, the main plate part 130 has a mirror-symmetrical outer shape. In the back plate 121, shapes of the extended part 131 and the extended part 132 are mirror symmetrical.

The extended part 131 on one side extends in a direction away from the main plate part 130 in the longitudinal direction of the main plate part 130 from one end portion side in the disc rotation direction and an outer side in the disc radial direction of the main plate part 130. The extended part 131 is inclined such that it is positioned further outward in the disc radial direction in the first reference line direction toward an extended distal end side. The extended part 132 on the other side extends in a direction away from the main plate part 130 in the longitudinal direction of the main plate part 130 from the other end portion side in the disc rotation direction and an outer side in the disc radial direction of the main plate part 130. The extended part 132 is inclined such that it is positioned further outward in the disc radial direction in the first reference line direction toward an extended distal end side.

The main plate part 130 includes a side surface portion 141 which is a flat surface extending perpendicular to the longitudinal direction of the main plate part 130 on one side thereof in the longitudinal direction which is a base position of the extended part 131. The main plate part 130 includes a side surface portion 142 which is a flat surface extending perpendicular to the longitudinal direction of the main plate part 130 on the other side thereof in the longitudinal direction which is a base position of the extended part 132. The main plate part 130 includes an outer surface portion 143 which is a flat surface extending perpendicular to the first radial reference line on the outer side in the disc radial direction. The side surface portions 141 and 142 and the outer surface portion 143 are all flat surfaces extending in a plate thickness direction of the back plate 121. The side surface portions 141 and 142 are parallel to each other. The side surface portions 141 and 142 are perpendicular to the outer surface portion 143.

As shown in FIGS. 5 and 6, the extended part 131 extends from between the side surface portion 141 and the outer surface portion 143. The extended part 131 has a rhombic shape when the back plate 121 is viewed from a plate thickness direction. The extended part 131 includes a surface portion 151 (facing surface portion) on an inner side in the disc radial direction, a surface portion 152 on an outer side in the disc radial direction and an inner side in the disc rotation direction, and a surface portion 153 on an outer side in the disc radial direction and an outer side in the disc rotation direction. The surface portions 151, 152, and 153 are all flat surfaces extending in the plate thickness direction of the back plate 121. The surface portions 151, 152, and 153 extend in the disc axial direction.

The surface portion 151 extends outward in the disc radial direction and outward in the disc rotation direction obliquely with respect to the longitudinal direction of the friction pad 102 and the first reference line direction from an end edge portion of the side surface portion 141 on the outer side in the disc radial direction. The surface portion 151 and the side surface portion 141 form an obtuse angle. The angle formed by the surface portion 151 and the side surface portion 141 is equivalent to an angle formed by the flat surface portion 73A of the pad support part 32A and the torque receiving surface 71A. The surface portion 152 extends outward in the disc radial direction and outward in the disc rotation direction obliquely with respect to the longitudinal direction of the friction pad 102 and the first reference line direction from an end edge portion of the outer surface portion 143 on the side surface portion 141 side in the disc rotation direction. The surface portion 152 and the outer surface portion 143 form an obtuse angle. The surface portion 152 extends parallel to the surface portion 151. The surface portion 153 connects an end edge portion of the surface portion 151 on a side opposite to the side surface portion 141 to an end edge portion of the surface portion 152 on a side opposite to the outer surface portion 143. The surface portion 153 extends parallel to the outer surface portion 143. The surface portion 151 and the surface portion 153 form an acute angle.

As shown in FIG. 5, the extended part 132 extends from between the side surface portion 142 and the outer surface portion 143. The extended part 132 has a rhombic shape when the back plate 121 is viewed from the plate thickness direction. The extended part 132 includes a surface portion 161 (facing surface portion) on an inner side in the disc radial direction, a surface portion 162 on an outer side in the disc radial direction and an inner side in the disc rotation direction, and a surface portion 163 on an outer side in the disc radial direction and an outer side in the disc rotation direction. The surface portions 161, 162, and 163 are all flat surfaces extending in the plate thickness direction of the back plate 121. The surface portions 161, 162, and 163 extend in the disc axial direction.

The surface portion 161 extends outward in the disc radial direction and outward in the disc rotation direction obliquely with respect to the longitudinal direction of the friction pad 102 and the first reference line direction from an end edge portion of the side surface portion 142 on the outer side in the disc radial direction. The surface portion 161 and the side surface portion 142 form an obtuse angle. An angle formed by the surface portion 161 and the side surface portion 142 is equivalent to the angle formed by the surface portion 151 and the side surface portion 141. The surface portion 162 extends outward in the disc radial direction and outward in the disc rotation direction obliquely with respect to the longitudinal direction of the friction pad 102 and the first reference line direction from an end edge portion of the outer surface portion 143 on the side surface portion 142 side in the disc rotation direction. The surface portion 162 and the outer surface portion 143 form an obtuse angle. The angle formed by the surface portion 162 and the outer surface portion 143 is equivalent to an angle formed by the surface portion 152 and the outer surface portion 143. The surface portion 162 extends parallel to the surface portion 161. The surface portion 163 connects an end edge portion of the surface portion 161 on a side opposite to the side surface portion 142 to an end edge portion of the surface portion 162 on a side opposite to the outer surface portion 143. The surface portion 163 extends parallel to the outer surface portion 143. The surface portion 161 and the surface portion 163 form an acute angle. The surface portion 163 is disposed on the same plane as the surface portion 153. A line connecting a boundary position between the surface portion 161 and the side surface portion 142 to a boundary position between the surface portion 151 and the side surface portion 141 is parallel to a line connecting the side surface portion 141 and the side surface portion 142 perpendicularly to each other. A distance between the side surface portion 141 and the side surface portion 142 is smaller than the distance between the torque receiving surface 71A and the torque receiving surface 81A. A maximum distance between the surface portion 151 and the surface portion 161 is larger than the distance between the torque receiving surface 71A and the torque receiving surface 81A. Similarly, the distance between the side surface portion 141 and the side surface portion 142 is smaller than the distance between the torque receiving surface 71B and the torque receiving surface 81B. The maximum distance between the surface portion 151 and the surface portion 161 is larger than the distance between the torque receiving surface 71B and the torque receiving surface 81B.

When the friction pad 102 is assembled to the outer side of the pad disposition space 61 of the caliper main body 15, the extended part 131 is supported by the pad support part 32A on the forward disc rotation exit side and the extended part 132 is supported by the pad support part 33A on the forward disc rotation entry side in a posture of the friction pad 102 in which the lining materials 122 and 123 are disposed on an inner side with respect to the back plate 121 and the extended parts 131 and 132 are disposed on the outer side in the disc radial direction.

At that time, in the friction pad 102 disposed on the outer side, the extended part 131 disposed on the forward disc rotation exit side comes into contact with the bent part 118 of the extended plate part 114 of the pad spring 101 at the surface portion 152 and is pressed inward in the disc radial direction and toward the forward disc rotation exit side by the bent part 118. Thereby, the extended part 131 comes into contact with the flat surface portion 73A of the pad support part 32A at the surface portion 151. Also, in the friction pad 102, the extended part 132 on the forward disc rotation entry side comes into contact with the extended plate part 116 of the pad spring 101 at the surface portion 163 and is pressed inward in the disc radial direction by the extended plate part 116. Thereby, the extended part 132 comes into contact with the flat surface portion 83A of the pad support part 33A at the surface portion 161.

In a state in which the friction pad 102 disposed on the outer side receives only a biasing force of the pad spring 101, the biasing force of the pad spring 101 brings the side surface portion 141 of the main plate part 130 into direct contact with the facing torque receiving surface 71A on the outer side and the forward disc rotation exit side by surface contact, brings the surface portion 151 of the extended part 131 into direct contact with the facing flat surface portion 73A on the outer side and the forward disc rotation exit side by surface contact, and brings the surface portion 161 of the extended part 132 into direct contact with the facing flat surface portion 83A on the outer side and the forward disc rotation entry side by surface contact.

In this state, the outer pad support part 32A of the caliper main body 15 includes the flat surface portion 73A that extends in a direction in which the extended part 131 of the outer friction pad 102 extends. In this state, the extended part 131 of the outer friction pad 102 is locked to the outer pad support part 32A. Also, in this state, the outer pad support part 33A of the caliper main body 15 includes the flat surface portion 83A that extends in a direction in which the extended part 132 of the outer friction pad 102 extends. In this state, the extended part 132 of the outer friction pad 102 is locked to the outer pad support part 33A. Also, in this state, the outer friction pad 102 brings the side surface portion 141 of the main plate part 130 into contact with the torque receiving surface 71A, and causes the side surface portion 142 of the main plate part 130 to face the torque receiving surface 81A with a slight gap therebetween. Further, in this state, the extended parts 131 and 132 of the outer friction pad 102 are disposed on an outer side in the disc radial direction with respect to an outermost circumference of the disc rotor 11. Also, in this state, the torque receiving surfaces 71A and 81A face in a direction in which the friction pad 102 is disposed.

When the friction pad 102 is assembled to the inner side of the pad disposition space 61 of the caliper main body 15, as shown in FIG. 1, the extended part 131 is supported by the pad support part 32B on the forward disc rotation entry side and the extended part 132 is supported by the pad support part 33B on the forward disc rotation exit side in a posture of the friction pad 102 in which the lining materials 122 and 123 are disposed on the outer side of the back plate 121 and the extended parts 131 and 132 are disposed on the outer side in the disc radial direction.

At that time, in the friction pad 102 disposed on the inner side, the extended part 132 disposed on the forward disc rotation exit side comes into contact with the bent part 119 of the extended plate part 115 of the pad spring 101 at the surface portion 162 and is pressed inward in the disc radial direction and toward the forward disc rotation exit side by the bent part 119. Thereby, the extended part 132 comes into contact with the flat surface portion 83B of the pad support part 33B at the surface portion 161. Also, in the friction pad 102, the extended part 131 on the forward disc rotation entry side comes into contact with the extended plate part 117 of the pad spring 101 at the surface portion 153 and is pressed inward in the disc radial direction by the extended plate part 117. Thereby, the extended part 131 comes into contact with the flat surface portion 73B of the pad support part 32B at the surface portion 151.

In a state in which the friction pad 102 disposed on the inner side receives only the biasing force of the pad spring 101, the biasing force of the pad spring 101 brings the side surface portion 142 of the main plate part 130 into direct contact with the facing torque receiving surface 81B on the inner side and the forward disc rotation exit side by surface contact, brings the surface portion 161 of the extended part 132 into direct contact with the facing flat surface portion 83B on the inner side and the forward disc rotation exit side by surface contact, and brings the surface portion 151 of the extended part 131 into direct contact with the facing flat surface portion 73B on the inner side and the forward disc rotation entry side by surface contact.

In this state, the inner pad support part 32B of the caliper main body 15 includes the flat surface portion 73B that extends in a direction in which the extended part 131 of the inner friction pad 102 extends. In this state, the extended part 131 of the inner friction pad 102 is locked to the inner pad support part 32B. Also, in this state, the inner pad support part 33B of the caliper main body 15 includes the flat surface portion 83B that extends in a direction in which the extended part 132 of the inner friction pad 102 extends. In this state, the extended part 132 of the inner friction pad 102 is locked to the inner pad support part 33B. Also, in this state, the inner friction pad 102 brings the side surface portion 142 of the main plate part 130 into contact with the torque receiving surface 81B, and causes the side surface portion 141 of the main plate part 130 to face the torque receiving surface 71B with a slight gap therebetween. Further, in this state, the extended parts 131 and 132 of the inner friction pad 102 are disposed on an outer side in the disc radial direction with respect to the outermost circumference of the disc rotor 11. Also, in this state, the torque receiving surfaces 71B and 81B face in a direction in which the friction pad 102 is disposed. As described above, the pair of friction pads 102 are locked to one caliper main body 15.

The outer friction pad 102 shown in FIG. 5 is supported by the outer pad support parts 32A and 33A of the caliper main body 15 and moves in the disc axial direction. At that time, the pad support parts 32A and 33A lock the extended parts 131 and 132 of the outer friction pad 102 with the flat surface portions 73A and 83A disposed in a V shape on both sides in the disc rotation direction.

The inner friction pad 102 shown in FIG. 1 is supported by the inner pad support parts 32B and 33B of the caliper main body 15 and moves in the disc axial direction. At that time, the pad support parts 32B and 33B lock the extended parts 131 and 132 of the inner friction pad 102 with the flat surface portions 73B and 83B disposed in a V shape on both sides in the disc rotation direction.

Therefore, the caliper 12 has a so-called pad pin-less structure in which the pair of friction pads 102 are directly supported by the caliper main body 15 without having a pad pin that supports the pair of friction pads 102. The pad support parts 32A, 33A, 32B, and 33B support the pair of friction pads 102 provided to face each other across the disc rotor 11 to be able to press against the disc rotor 11.

In the above disc brake 10, when the brake fluid is introduced into the cylinder bores 38, 39, 58, and 59 of the cylinder parts 21 and 22 shown in FIGS. 2 and 3 through the supply/discharge port 41 shown in FIG. 1, the two pairs of pistons 16 and 16 and pistons 17 and 17 shown in FIG. 4 move in a direction of the disc rotor 11 due to a hydraulic pressure of the brake fluid. Then, the two pistons 16 and 17 provided in the cylinder part 21 on the outer side press the outer friction pad 102 provided between the cylinder part 21 and the disc rotor 11 so that the lining materials 122 and 123 thereof are pressed against the disc rotor 11. Also, the two pistons 16 and 17 provided in the cylinder part 22 on the inner side press the inner friction pad 102 provided between the cylinder part 22 and the disc rotor 11 so that the lining materials 122 and 123 thereof are pressed against the disc rotor 11. Thereby, a braking force is generated in the vehicle. In other words, the pistons 16 and 17 on the outer side press the outer friction pad 102 against the disc rotor 11, and the pistons 16 and 17 on the inner side press the inner friction pad 102 against the disc rotor 11.

At this time, the pair of friction pads 102 are supported by the caliper main body 15 so that inward movement in the disc radial direction and movement in the disc rotation direction are restricted by the pad support parts 32A, 33A, 32B, and 33B, and move in the disc axial direction.

When the outer friction pad 102 moves in the disc axial direction, the outer friction pad 102 shown in FIG. 5 is locked to the outer pad support parts 32A and 33A at the extended parts 131 and 132 and moves. At that time, the extended part 131 slides on the flat surface portion 73A of the pad support part 32A by the surface portion 151, and the extended part 132 slides on the flat surface portion 83A of the pad support part 33A by the surface portion 161. When the inner friction pad 102 moves in the disc axial direction, the inner friction pad 102 shown in FIG. 1 is supported by the inner pad support parts 32B and 33B at the extended parts 131 and 132 and moves. At that time, the extended part 132 slides on the flat surface portion 83B of the pad support part 33B by the surface portion 161, and the extended part 131 slides on the flat surface portion 73B of the pad support part 32B by the surface portion 151. In this way, the caliper main body 15 including the pad support parts 32A, 33A, 32B, and 33B supports the friction pad 102 to be movable in the disc axial direction.

At the time of forward braking of the vehicle, both the friction pads 102 come into contact with the disc rotor 11 via the lining materials 122 and 123 and move to the forward disc rotation exit side. Then, as shown in FIG. 4, the outer friction pad 102 comes into contact with the torque receiving surface 71A of the pad support part 32A, which is on the forward disc rotation exit side, at the side surface portion 141 of the back plate 121, and the inner friction pad 102 comes into contact with the torque receiving surface 81B of the pad support part 33B, which is on the forward disc rotation exit side, at the side surface portion 142 of the back plate 121. Thereby, the caliper main body 15 receives a braking torque mainly at the pad support parts 32A and 33B.

At the time of reward braking of the vehicle, both the friction pads 102 come into contact with the disc rotor 11 via the lining materials 122 and 123 and move to a rearward disc rotation exit side. Then, the outer friction pad 102 comes into contact with the torque receiving surface 81A of the pad support part 33A, which is on the rearward disc rotation exit side, at the side surface portion 142 of the back plate 121, and the inner friction pad 102 comes into contact with the torque receiving surface 71B of the pad support part 32B, which is on the rearward disc rotation exit side, at the side surface portion 141 of the back plate 121. Thereby, the caliper main body 15 receives the braking torque mainly at the pad support parts 32B and 33A.

Patent Document 1 described above describes a disc brake in which an extended part extending in a longitudinal direction of a friction pad is formed on both end portion sides in the disc rotation direction and an outer side in the disc radial direction of the friction pad, and the extended part is supported by a caliper main body. In this disc brake, a retainer, as a countermeasure against wear of the caliper main body, is interposed between the extended part of the friction pad and the caliper main body. Therefore, a space for disposing the retainer is required, and this causes an increase in size of the caliper main body, resulting in an increase in costs. Also, the number of parts increases due to the retainer, resulting in an increase in costs.

In contrast, in the first example, the extended parts 131 and 132 extending in a direction inclined with respect to the longitudinal direction of the friction pad 102 are formed on both end portion sides in the disc rotation direction and an outer side in the disc radial direction of the back plate 121 of the friction pad 102. Also, the caliper main body 15 that supports the friction pad 102 to be movable in the disc axial direction includes the pad support part 32A having the flat surface portion 73A that extends in a direction in which the extended part 131 of the outer friction pad 102 extends, the pad support part 33A having the flat surface portion 83A that extends in a direction in which the extended part 132 of the outer friction pad 102 extends, the pad support part 32B having the flat surface portion 73B that extends in a direction in which the extended part 131 of the inner friction pad 102 extends, and the pad support part 33B having the flat surface portion 83B that extends in a direction in which the extended part 132 of the inner friction pad 102 extends. Then, the extended part 131 of the outer friction pad 102 is brought into contact with the flat surface portion 73A and locked to the pad support part 32A, the extended part 132 of the outer friction pad 102 is brought into contact with the flat surface portion 83A and locked to the pad support part 33A, the extended part 131 of the inner friction pad 102 is brought into contact with the flat surface portion 73B and locked to the pad support part 32B, and the extended part 132 of the inner friction pad 102 is brought into contact with the flat surface portion 83B and locked to the pad support part 33B.

Thereby, lengths in the disc rotation direction of the extended parts 131 and 132 of the outer friction pad 102 and the pad support parts 32A and 33A of the caliper main body 15 can be reduced while maintaining contact lengths between the extended parts 131 and 132 of the outer friction pad 102 and the flat surface portions 73A and 83A. Similarly, lengths in the disc rotation direction of the extended parts 131 and 132 of the inner friction pad 102 and the pad support parts 32B and 33B of the caliper main body 15 can be reduced while maintaining contact lengths between the extended parts 131 and 132 of the inner friction pad 102 and the flat surface portions 73B and 83B. Therefore, the friction pad 102 and the caliper main body 15 can be reduced in size in the disc rotation direction. Therefore, particularly, costs of parts of the caliper main body 15 can be reduced. Moreover, as a result of the reduction in size of the caliper main body 15 in the disc rotation direction, the entire caliper 12 can be reduced in size in the disc rotation direction.

Alternatively, contact lengths between the extended parts 131 and 132 of the outer friction pad 102 and the flat surface portions 73A and 83A can be increased without increasing lengths of the extended parts 131 and 132 of the outer friction pad 102 and the outer pad support parts 32A and 33A in the disc rotation direction, and thereby a contact area can be increased. Similarly, a contact length between the extended parts 131 and 132 of the inner friction pad 102 and the flat surface portions 73B and 83B can be increased without increasing lengths of the extended parts 131 and 132 of the inner friction pad 102 and the inner pad support parts 32B and 33B in the disc rotation direction, and thereby a contact area can be increased. Therefore, a vibration load of the friction pad 102 received by the caliper main body 15 can be dispersed. Therefore, wear of the caliper main body 15 can be suppressed without interposing a retainer as a countermeasure against wear between the extended parts 131 and 132 of the pair of friction pads 102 and the pad support parts 32A, 32B, 33A, and 33B.

That is, a structure can be made such that the flat surface portion 73A of the outer pad support part 32A is brought into direct contact with the facing surface portion 151 of the extended part 131 of the outer friction pad 102, the flat surface portion 83A of the outer pad support part 33A is brought into direct contact with the facing surface portion 161 of the extended part 132 of the outer friction pad 102, the flat surface portion 73B of the inner pad support part 32B is brought into direct contact with the facing surface portion 151 of the extended part 131 of the inner friction pad 102, and the flat surface portion 83B of the inner pad support part 33B is brought into direct contact with the facing surface portion 161 of the extended part 132 of the inner friction pad 102. Therefore, the structure is made such that a retainer as a countermeasure against wear is not interposed between the extended parts 131 and 132 of the pair of friction pads 102 and the pad support parts 32A, 33A, 32B, and 33B, and thus the number of parts can be reduced. Therefore, costs of parts and assembly man-hours can be reduced. In addition, it is not necessary to secure a space for disposing the retainer, and thus a degree of freedom in design increases.

Also, since a vibration load of the friction pad 102 received by the caliper main body 15 can be dispersed, wear of the caliper main body 15 can be suppressed without increasing a load of the pad spring 101. Therefore, dragging of the friction pad 102 that occurs when the load of the pad spring 101 is large can be suppressed.

Also, the extended parts 131 and 132 of the friction pads 102 on both the outer side and inner side are disposed on an outer side in the disc radial direction with respect to the outermost circumference of the disc rotor 11. Therefore, the flat surface portions 73A, 83A, 73B, and 83B of the pad support parts 32A, 33A, 32B, and 33B supporting the extended parts 131 and 132 can be easily made as surfaces exposed to the outside on the outer side in the disc radial direction. Therefore, the flat surface portions 73A, 83A, 73B, and 83B can be formed by casting without a core. Therefore, the flat surface portions 73A, 83A, 73B, and 83B can be formed without using or processing a core, and thus manufacturing costs can be reduced.

Also, the caliper main body 15 that supports the pair of friction pads 102 includes the pair of cylinder parts 21 and 22 in which the pistons 16 and 17 as pressing members are accommodated and disposed to face each other, and the pair of end side connection parts 23 and 24 that connect the pair of cylinder parts 21 and 22 across the disc rotor 11 at the end portions of the pair of cylinder parts 21 and 22 in the disc rotation direction. The pad support parts 32A and 33B are provided at the end side connection part 23 on one side, and the pad support parts 32B and 33A are provided at the end side connection part 24 on the other side. Therefore, a size of the caliper main body 15 in the disc rotation direction is highly effectively reduced.

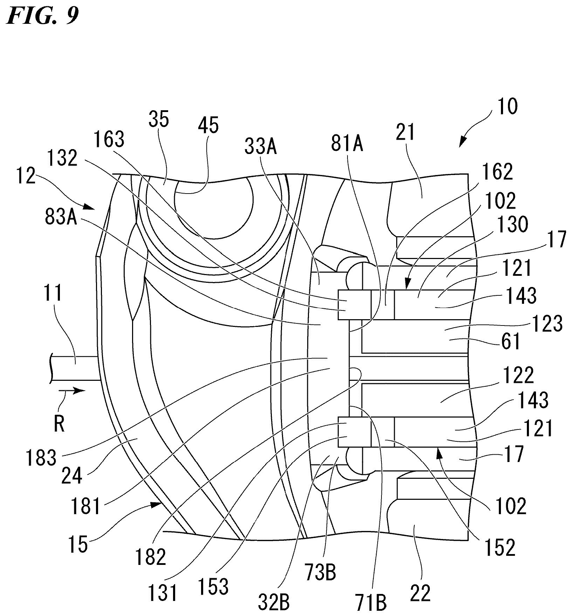

Further, in the first example, as shown in FIG. 9, the outer pad support part 33A on the forward disc rotation entry side and the inner pad support part 32B on the forward disc rotation entry side in the caliper main body 15 may be connected in the disc axial direction on the outer side in the disc radial direction. That is, a support part connecting part 181 that connects the pad support part 33A and the pad support part 32B in the disc axial direction on the outer side in the disc radial direction is formed. The support part connecting part 181 crosses the outer circumferential side of the disc rotor 11 in the disc axial direction. The support part connecting part 181 includes a connecting surface portion 182 disposed on the same plane as the torque receiving surfaces 71B and 81A and making the torque receiving surfaces 71B and 81A continuous in the disc axial direction on the outer side in the disc radial direction, and a connecting surface portion 183 disposed on the same plane as the flat surface portions 73B and 83A and making the flat surface portions 73B and 83A continuous in the disc axial direction.

Although not shown, a support part connecting part 181 that connects the pad support part 32A and the pad support part 33B in the disc axial direction on the outer side in the disc radial direction is formed also on the forward disc rotation exit side in the same manner. The support part connecting part 181 includes a connecting surface portion 182 disposed on the same plane as the torque receiving surfaces 71A and 81B and making the torque receiving surfaces 71A and 81B continuous in the disc axial direction on the outer side in the disc radial direction, and a connecting surface portion 183 disposed on the same plane as the flat surface portions 73A and 83B and making the flat surface portions 73A and 83B continuous in the disc axial direction.

In other words, in the caliper main body 15, the flat surface portion 83A of the pad support part 33A that locks the extended part 132 of the outer friction pad 102 is made to be continuous in the disc axial direction with the flat surface portion 73B of the pad support part 32B that locks the extended part 131 of the inner friction pad 102 by the connecting surface portion 183. Although not shown, similarly, in the caliper main body 15 the flat surface portion 73A of the pad support part 32A that locks the extended part 131 of the outer friction pad 102 is made to be continuous in the disc axial direction with the flat surface portion 83B of the pad support part 33B that locks the extended part 132 of the inner friction pad 102 by the connecting surface portion 183.

With this configuration, in a state before the caliper 12 is attached to the vehicle body, falling off of the friction pad 102 in an assembled state on the caliper 12 from the caliper main body 15 can be prevented.

Also, the pad support part 32B and the pad support part 33A are continuous due to the support part connecting part 181, and the pad support part 32A and the pad support part 33B are continuous due to the support part connecting part 181, and thereby stress concentration occurring in the caliper main body 15 can be minimized and reliability can be improved.

Further, in this case, there is a possibility that the support part connecting part 181 may decrease an efficiency of assembling the friction pad 102 on the caliper main body 15. Therefore, the efficiency of assembling the friction pad 102 on the caliper main body 15 may be secured, for example, by eliminating the intermediate connection part 25 of the caliper main body 15.

### [Second Example]

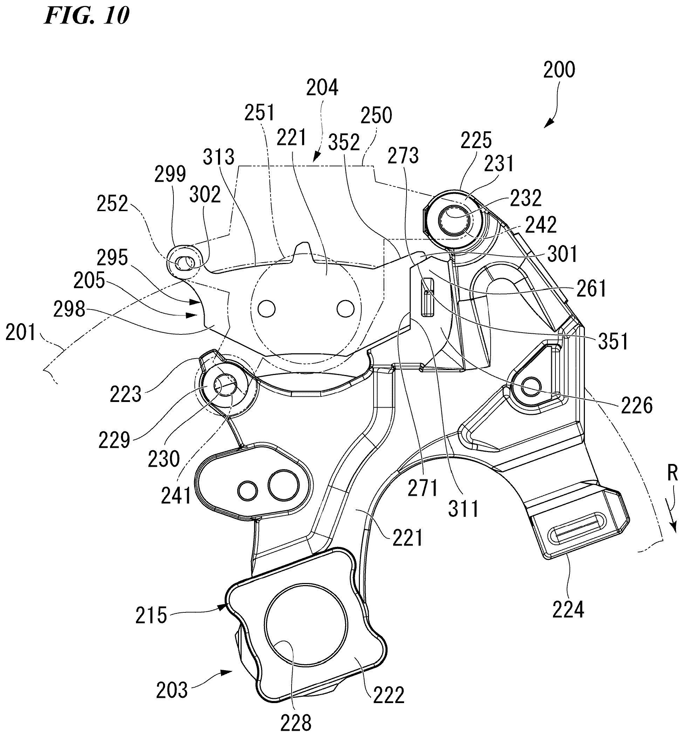

Next, a second example according to the present invention will be described mainly with reference to FIGS. 10 to 12.

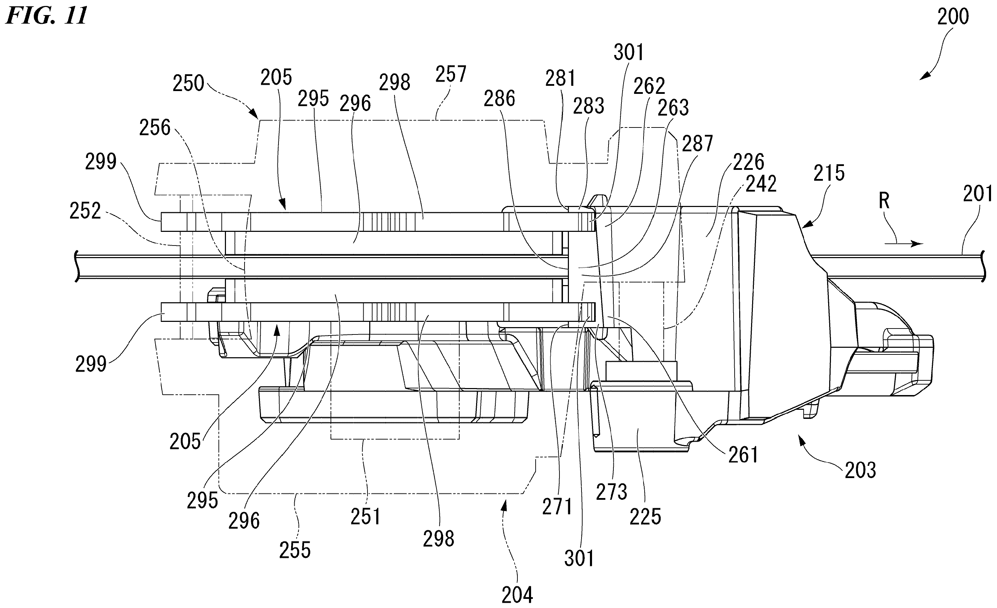

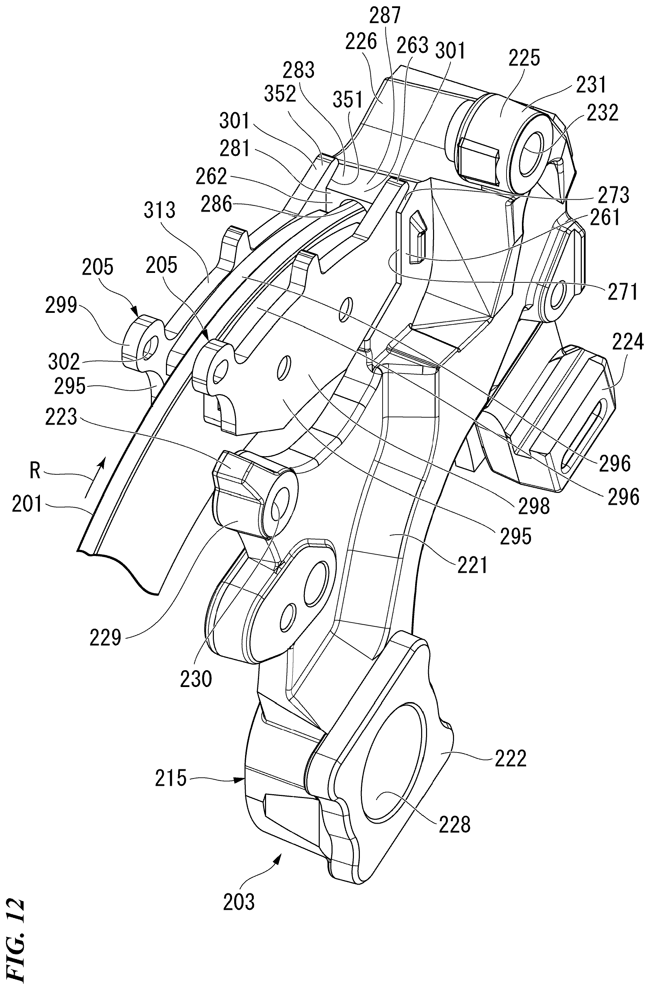

As shown in FIG. 10, a disc brake 200 of the second example includes a disc rotor 201, a carrier 203, and a caliper 204. Also, the disc brake 200 includes a pair of friction pads 205 as shown in FIGS. 11 and 12.

As shown in FIG. 10, the carrier 203 includes a bracket 215 (supporting member) fixed to a non-rotating portion of a vehicle. The bracket 215 is disposed mainly on an outer side which is one surface side of the disc rotor 201 and is fixed to a non-rotating portion in the vicinity of the disc rotor 201 of the vehicle. The bracket 215 includes a base plate 221 that extends perpendicular to a disc axial direction, a boss part 222 provided on an inner side in a disc radial direction of the base plate 221 on a forward disc rotation entry side, and a rotation entry side protruding part 223 that protrudes outward in the disc radial direction and toward the forward disc rotation entry side from an end portion on an outer side in the disc radial direction of the base plate 221 and the forward disc rotation entry side. Also, the bracket 215 includes a rotation exit side protruding part 224 that protrudes to a forward disc rotation exit side from the inner side in the disc radial direction of the base plate 221 on a forward disc rotation exit side, and a radial protruding part 225 that protrudes outward in the disc radial direction from the outer side in the disc radial direction of the base plate 221 on the forward disc rotation exit side. The base plate 221, the boss part 222, the rotation entry side protruding part 223, the rotation exit side protruding part 224, and the radial protruding part 225 are disposed on an outer side of the disc rotor 201.

Further, as shown in FIG. 11, the bracket 215 includes an axial protruding part 226 that protrudes to an inner side of the disc rotor 201 from the radial protruding part 225. The axial protruding part 226 is disposed to cross the disc rotor 201. The bracket 215 is a cast part, and the base plate 221, the boss part 222, the rotation entry side protruding part 223, the rotation exit side protruding part 224, the radial protruding part 225, and the axial protruding part 226 are integrally formed at the time of casting.

As shown in FIG. 10, a through hole 228 extending in the disc axial direction is formed in the boss part 222 of the bracket 215. An axle (not shown) is disposed in the through hole 228. An inner pin mounting part 229 is formed at a distal end portion on a protruding side of the rotation entry side protruding part 223 of the bracket 215. An inner pin mounting hole 230 is formed in the inner pin mounting part 229 in parallel with the through hole 228. An outer pin mounting part 231 is formed at a distal end portion on a protruding side of the radial protruding part 225 of the bracket 215. An outer pin mounting hole 232 is formed in the outer pin mounting part 231 in parallel with the through hole 228.

The carrier 203 includes the bracket 215, and a slide pin 241 and a slide pin 242 which are mounted to the bracket 215. The slide pin 241 is screwed into the inner pin mounting hole 230 of the bracket 215 and fixed to the inner pin mounting part 229. The slide pin 242 is screwed into the outer pin mounting hole 232 and fixed to the outer pin mounting part 231. Then, the caliper 204 is attached to the carrier 203 to be movable in the disc axial direction by these slide pins 241 and 242. The caliper 204 is disposed to cross the disc rotor 201 in a state of being supported by the carrier 203.

The caliper 204 includes a caliper main body 250 (pressing member) slidably supported by the slide pins 241 and 242 of the carrier 203, a piston 251 (pressing member), and a pad pin 252. As shown in FIG. 11, the caliper main body 250 includes a cylinder part 255 disposed on the outer side of the disc rotor 201, a bridge part 256 that extends to the inner side to cross over the radial outer side of the disc rotor 201 from the outer side in the disc radial direction of the cylinder part 255, and a claw part 257 that extends inward in the disc radial direction to face the cylinder part 255 from an end portion on the inner side of the bridge part 256. The piston 251 is accommodated in the cylinder part 255 of the caliper main body 250 to be movable in the disc axial direction.

The pad pin 252 is attached to the forward disc rotation entry side of the cylinder part 255 and the claw part 257 to connect them. The pad pin 252 extends in the disc axial direction. As shown in FIG. 10, the pad pin 252 is disposed to cross the disc rotor 201 on the outer side with respect to the disc rotor 201 in the disc radial direction. In the second example, a line extending in the disc radial direction through a disc axis of the disc rotor 201 and a central axis of the piston 251 is referred to as a second radial reference line, and a direction in which the second radial reference line extends is referred to as a second reference line direction. The second radial reference line is perpendicular to the disc axis and the central axis of the piston 251.

As shown in FIG. 12, the axial protruding part 226 of the bracket 215 includes a pad support part 261 on the forward disc rotation entry side and the outer side in the disc axial direction. The axial protruding part 226 includes a pad support part 262 on the forward disc rotation entry side and the inner side in the disc axial direction. Also, the axial protruding part 226 includes a support part connecting part 263 that connects the pad support part 261 and the pad support part 262 in the disc axial direction on the outer side in the disc radial direction formed between the pad support part 261 and the pad support part 262. Therefore, the axial protruding part 226 includes the pad support parts 261 and 262 on both sides thereof in the disc axial direction.

The pad support part 261 and the pad support part 262 face each other in the disc axial direction while positions thereof in the disc rotation direction and the disc radial direction are aligned to be superimposed on each other. The disc rotor 201 is disposed between the pad support part 261 and the pad support part 262.

A torque receiving surface 271 facing the forward disc rotation entry side and a flat surface portion 273 on the outer side in the disc radial direction are formed in the pad support part 261. The torque receiving surface 271 is a flat surface extending parallel to the second radial reference line. The torque receiving surface 271 also extends parallel to the disc axis. The flat surface portion 273 is a flat surface extending parallel to the disc axis. The flat surface portion 273 faces outward in the disc radial direction. In the second reference line direction, the flat surface portion 273 is inclined to become further away from the second radial reference line outward in the disc radial direction. The flat surface portion 273 and the torque receiving surface 271 form an obtuse angle. The flat surface portion 273 and the torque receiving surface 271 are not limited to having an obtuse angle and may have an acute angle.

A torque receiving surface 281 facing the forward disc rotation entry side and a flat surface portion 283 on the outer side in the disc radial direction are formed in the pad support part 262. The torque receiving surface 281 is a flat surface extending parallel to the second radial reference line. The torque receiving surface 281 also extends parallel to the disc axis. The torque receiving surface 281 is disposed on the same plane as the torque receiving surface 271. The flat surface portion 283 is a flat surface extending parallel to the disc axis. The flat surface portion 283 faces outward in the disc radial direction. In the second reference line direction, the flat surface portion 283 is inclined to become further away from the second radial reference line outward in the disc radial direction. The flat surface portion 283 is disposed on the same plane as the flat surface portion 273. The flat surface portion 283 and the torque receiving surface 281 form an obtuse angle, and this angle is equivalent to an angle formed by the flat surface portion 273 and the torque receiving surface 271. The flat surface portion 283 and the torque receiving surface 281 are not limited to having an obtuse angle and may have an acute angle.

The support part connecting part 263 crosses an outer circumferential side of the disc rotor 201 in the disc axial direction. The support part connecting part 263 includes a connecting surface portion 286 disposed on the same plane as the torque receiving surfaces 271 and 281 and making the torque receiving surfaces 271 and 281 continuous in the disc axial direction on the outer side in the disc radial direction, and a connecting surface portion 287 disposed on the same plane as the flat surface portions 273 and 283 and making the flat surface portions 273 and 283 continuous in the disc axial direction.

The pair of friction pads 205 are constituted by back plates 295 having the same shape and lining materials 296 having the same shape and affixed to the back plates 295. In the pair of friction pads 205, orientations of surfaces of the lining materials 296 affixed to the back plates 295 on the outer side and the inner side with respect to the disc rotor 201 are opposite to each other. That is, the friction pad 205 disposed on the outer side and the friction pad 205 disposed on the inner side have a mirror-symmetrical shape.

The back plate 295 is formed of a single plate, and as shown in FIG. 10, includes a main plate part 298, an arm part 299 extending obliquely outward from an end portion on one end side in a length direction of the main plate part 298 and the outer side in the disc radial direction, and an extended part 301 extending obliquely outward from an end portion on the other end side in the length direction of the main plate part 298 and the outer side in the disc radial direction. A pin hole 302 is formed in the arm part 299 in a thickness direction of the back plate 295. The pin hole 302 is an elongated hole that is long in the disc rotation direction.

The main plate part 298 has a shape that is long in the disc rotation direction. As shown in FIG. 12, the lining material 296 is affixed to the main plate part 298. As shown in FIG. 10, the arm part 299 extends in a direction inclined with respect to a longitudinal direction of the main plate part 298 from the outer side in the disc radial direction of an end portion of the forward disc rotation entry side which is one side in the longitudinal direction of the main plate part 298. The extended part 301 extends in a direction inclined with respect to the longitudinal direction of the main plate part 298 from the outer side in the disc radial direction of an end portion on the forward disc rotation exit side which is the other side in the longitudinal direction of the main plate part 298. The longitudinal direction of the main plate part 298 is a longitudinal direction of the back plate 295. The longitudinal direction of the main plate part 298 is a longitudinal direction of the friction pad 205. Therefore, the arm part 299 and the extended part 301 extending in a direction inclined with respect to the longitudinal direction of the friction pad 205 are formed in the back plate 295 on both end portion sides in the disc rotation direction and an outer side in the disc radial direction. In the back plate 121, the main plate part 298 has substantially a mirror-symmetrical shape. In the back plate 121, a shape of the arm part 299 and the extended part 301 is asymmetric.

The extended part 301 extends in a direction away from the main plate part 298 in the longitudinal direction of the main plate part 298 from one end portion side in the disc rotation direction and an outer side in the disc radial direction of the main plate part 298. The extended part 301 is inclined such that it is positioned further outward in the disc radial direction in the second reference line direction toward an extended distal end side.

The main plate part 298 includes a side surface portion 311 which is a flat surface extending perpendicular to the longitudinal direction of the main plate part 298 on one side thereof in the longitudinal direction which is a base position of the extended part 301. The main plate part 298 includes an outer surface portion 313 along an outer circumferential surface of the disc rotor 201 on the outer side in the disc radial direction. The side surface portion 311 is a flat surface extending in a plate thickness direction of the back plate 121.

The extended part 301 extends to become further away from the main plate part 298 obliquely with respect to the longitudinal direction of the friction pad 205 and the second reference line direction from between the side surface portion 311 and the outer surface portion 313. The extended part 301 includes a surface portion 351 (facing surface portion) on the inner side in the disc radial direction and a surface portion 352 on the outer side in the disc radial direction. The surface portions 351 and 352 are both flat surfaces extending in the plate thickness direction of the back plate 121.

The surface portion 351 extends outward in the disc radial direction and toward the forward disc rotation exit side obliquely with respect to the longitudinal direction of the friction pad 205 and the second reference line direction from an end edge portion of the side surface portion 311 on the outer side in the disc radial direction. The surface portion 351 and the side surface portion 311 form an obtuse angle. An angle formed by the surface portion 351 and the side surface portion 311 is equivalent to the angle formed by the flat surface portion 273 and the torque receiving surface 271 of the pad support part 261. The surface portion 352 extends outward in the disc radial direction and toward the forward disc rotation exit side obliquely with respect to the longitudinal direction of the friction pad 205 and the second reference line direction from an end edge portion of the outer surface portion 313 on the forward disc rotation exit side. The surface portion 352 extends substantially parallel to the surface portion 351.

With the outer friction pad 205 having a posture in which the lining material 296 is disposed on the inner side with respect to the back plate 295, and the arm part 299 and the extended part 301 are disposed on the outer side in the disc radial direction, the arm part 299 thereof is supported by the pad pin 252 on the forward disc rotation entry side inserted into the pin hole 302. Also, in this posture of the outer friction pad 205, the extended part 301 thereof is supported by the outer pad support part 261 on the forward disc rotation exit side.

At that time, the outer friction pad 205 is pressed inward in the disc radial direction and toward the forward disc rotation exit side by a pad spring (not shown) provided in the caliper 204. Then, the extended part 301 disposed on the forward disc rotation exit side comes into direct contact with the flat surface portion 273 of the outer pad support part 261 at the surface portion 351 by surface contact. Also, the main plate part 298 comes into direct contact with the torque receiving surface 271 of the pad support part 261 at the side surface portion 311 by surface contact.

In this state, the outer pad support part 261 of the bracket 215 includes the flat surface portion 273 that extends in a direction in which the extended part 301 of the outer friction pad 205 extends. Also, in this state, the extended part 301 of the outer friction pad 205 is locked to the outer pad support part 261. Also, in this state, the extended part 301 of the outer friction pad 205 is disposed on an outer side in the disc radial direction with respect to an outermost circumference of the disc rotor 11. Further, in this state, the torque receiving surface 271 of the outer pad support part 261 faces in a direction in which the outer friction pad 205 is disposed.

With the inner friction pad 205 having a posture in which the lining material 296 is disposed on the outer side of the back plate 295, and the arm part 299 and the extended part 301 are disposed on the outer side in the disc radial direction, the arm part 299 thereof is supported by the pad pin 252 on the forward disc rotation entry side inserted into the pin hole 302. Also, in this posture of the inner friction pad 205, the extended part 301 thereof is supported by the inner pad support part 262 on the forward disc rotation exit side.

At that time, the inner friction pad 205 is pressed inward in the disc radial direction and toward the forward disc rotation exit side by the pad spring (not shown) provided in the caliper 204. Then, the extended part 301 disposed on the forward disc rotation exit side comes into direct contact with the flat surface portion 283 of the inner pad support part 262 at the surface portion 351 by surface contact. Also, the main plate part 298 comes into direct contact with the torque receiving surface 281 of the pad support part 262 at the side surface portion 311 by surface contact.

In this state, the inner pad support part 262 of the bracket 215 includes the flat surface portion 283 that extends in a direction in which the extended part 301 of the inner friction pad 205 extends. Also, in this state, the extended part 301 of the inner friction pad 205 is locked to the inner pad support part 262. Also, in this state, the extended part 301 of the inner friction pad 205 is disposed on an outer side in the disc radial direction with respect to the outermost circumference of the disc rotor 11. Further, in this state, the torque receiving surface 281 of the inner pad support part 262 faces in a direction in which the inner friction pad 205 is disposed. As described above, the pair of friction pads 205 are locked to the bracket 215.

The outer friction pad 205 is supported by the outer pad support part 261 of the bracket 215 and the pad pin 252 of the caliper 204 and moves in the disc axial direction. At that time, the pad support part 261 locks the extended part 301 of the outer friction pad 205. The inner friction pad 205 is supported by the inner pad support part 262 of the bracket 215 and the pad pin 252 of the caliper 204 and moves in the disc axial direction. At that time, the pad support part 262 locks the extended part 301 of the inner friction pad 205.

In the caliper 204, when a brake fluid is introduced into the cylinder part 255, the piston 251 moves forward in a direction of the disc rotor 201 in the disc axial direction with respect to the cylinder part 255, and presses the outer friction pad 205 against the disc rotor 201. Then, the outer friction pad 205 comes into contact with one surface of the disc rotor 201 via the lining material 296. Also, due to a reaction force generated thereby, the caliper main body 250 slides on the slide pins 241 and 242 of the carrier 203 and moves in a direction of separating the cylinder part 255 from the disc rotor 201. Then, the claw part 257 presses the lining material 296 of the inner friction pad 205 against the other surface of the disc rotor 201. In this way, the caliper 204 applies a brake to rotation of the disc rotor 201, that is, the wheel, by the claw part 257 and the piston 251 sandwiching the pair of friction pads 205 from both sides and pressing against the disc rotor 201.

At this time, the pair of friction pads 205 are supported by the carrier 203 and the caliper 204 so that inward movement in the disc radial direction and movement in the disc rotation direction are restricted by the pad supports parts 261 and 262 and the pad pins 252, and move in the disc axial direction.

When the outer friction pad 205 moves in the disc axial direction, it moves with the extended part 301 supported by the outer pad support part 261 and the arm part 299 supported by the pad pin 252. At that time, the extended part 301 slides on the flat surface portion 273 of the pad support part 261 by the surface portion 351, and the arm part 299 slides along the pad pin 252. When the inner friction pad 205 moves in the disc axial direction, it moves with the extended part 301 supported by the inner pad support part 262 and the arm part 299 supported by the pad pin 252. At that time, the extended part 301 slides on the flat surface portion 283 of the pad support part 262 by the surface portion 351, and the arm part 299 slides along the pad pin 252. **In** this way, the bracket 215 including the pad support parts 261 and 262 supports the friction pads 205 to be movable in the disc axial direction.

At the time of forward braking of the vehicle, both the pair of friction pads 205 come into contact with the disc rotor 201 via the lining materials 296 and move to the forward disc rotation exit side. Then, the outer friction pad 205 comes into direct contact with the torque receiving surface 271 of the outer pad support part 261 at the side surface portion 311 of the back plate 295 by surface contact. Also, the inner friction pad 205 comes into direct contact with the torque receiving surface 281 of the inner pad support part 262 at the side surface portion 311 of the back plate 295 by surface contact. Thereby, the bracket 215 receives a braking torque mainly at the pad support parts 261 and 262.

At the time of rearward braking of the vehicle, both the pair of friction pads 205 come into contact with the disc rotor 201 via the lining materials 296, move to a rearward disc rotation exit side, and come into contact with the pad pin 252 at the arm part 299 of the back plate 295. Thereby, the caliper 204 receives a braking torque mainly at the pad pin 252.

In the second example, the extended part 301 extending in a direction inclined with respect to the longitudinal direction of the friction pad 205 is formed on an end portion side in the disc rotation direction and an outer side in the disc radial direction of the back plate 295 of the friction pad 205. Also, the bracket 215 that supports the friction pad 205 to be movable in the disc axial direction includes the pad support part 261 having the flat surface portion 273 that extends in a direction in which the extended part 301 of the outer friction pad 205 extends, and the pad support part 262 having the flat surface portion 283 that extends in a direction in which the extended part 301 of the inner friction pad 205 extends. Then, the extended part 301 of the outer friction pad 205 is brought into contact with the flat surface portion 273 and locked to the pad support part 261. Also, the extended part 301 of the inner friction pad 205 is brought into contact with the flat surface portion 283 and locked to the pad support part 262.

Thereby, lengths of the extended part 301 of the outer friction pad 205 and the outer pad support part 261 of the bracket 215 in the disc rotation direction can be reduced while maintaining a contact length between the extended part 301 of the outer friction pad 205 and the flat surface portion 273. Similarly, lengths of the extended part 301 of the inner friction pad 205 and the inner pad support part 262 of the bracket 215 in the disc rotation direction can be reduced while maintaining a contact length between the extended part 301 of the inner friction pad 205 and the flat surface portion 283. Therefore, the friction pad 205 and the bracket 215 can be reduced in size in the disc rotation direction. Therefore, particularly, costs of parts of the bracket 215 can be reduced.

Alternatively, the contact length between the extended part 301 of the outer friction pad 205 and the flat surface portion 273 can be increased without increasing the lengths of the extended part 301 of the outer friction pad 205 and the outer pad support part 261 in the disc rotation direction, and thereby a contact area can be increased. Similarly, the contact length between the extended part 301 of the inner friction pad 205 and the flat surface portion 283 can be increased without increasing lengths of the extended part 301 of the inner friction pad 205 and the inner pad support part 262 in the disc rotation direction, and thereby a contact area can be increased. Therefore, a vibration load of the friction pad 205 received by the bracket 215 can be dispersed. Therefore, wear of the bracket 215 can be suppressed without interposing a retainer as a countermeasure against wear between the extended parts 301 of the pair of friction pads 205 and the pad support parts 261 and 262.

That is, a structure can be made such that the flat surface portion 273 of the pad support part 261 is brought into direct contact with the facing surface portion 351 of the extended part 301 of the outer friction pad 205, and the flat surface portion 283 of the pad support part 262 is brought into direct contact with the facing surface portion 351 of the extended part 301 of the inner friction pad 205. Therefore, the structure is made such that a retainer as a countermeasure against wear is not interposed between the extended parts 301 of the pair of friction pads 205 and the pad support parts 261 and 262, and thus the number of parts can be reduced. Therefore, costs of parts and assembly man-hours can be reduced. In addition, it is not necessary to secure a space for disposing a retainer, and thus a degree of freedom in design increases.

Also, since a vibration load of the friction pad 205 received by the bracket 215 can be dispersed, wear of the bracket 215 can be suppressed without increasing a load of the pad spring. Therefore, dragging of the friction pad 205 can be suppressed.

Also, the extended parts 301 of the friction pads 205 on both the outer side and inner side are disposed on an outer side in the disc radial direction with respect to the outermost circumference of the disc rotor 11. Therefore, the flat surface portions 273 and 283 of the pad support parts 261 and 262 supporting the extended parts 301 can be easily made as surfaces exposed to the outside on the outer side in the disc radial direction. Therefore, the flat surface portions 273 and 283 can be formed by casting without a core. Therefore, the flat surface portions 273 and 283 can be formed without using or processing a core, and thus manufacturing costs can be reduced.

Also, in the bracket 215, the flat surface portion 273 of the pad support part 261 and the flat surface portion 283 of the pad support part 262 are continuous in the disc axial direction due to the connecting surface portion 287. Thereby, stress concentration occurring in the bracket 215 can be minimized and reliability can be improved.

### [Third Example]

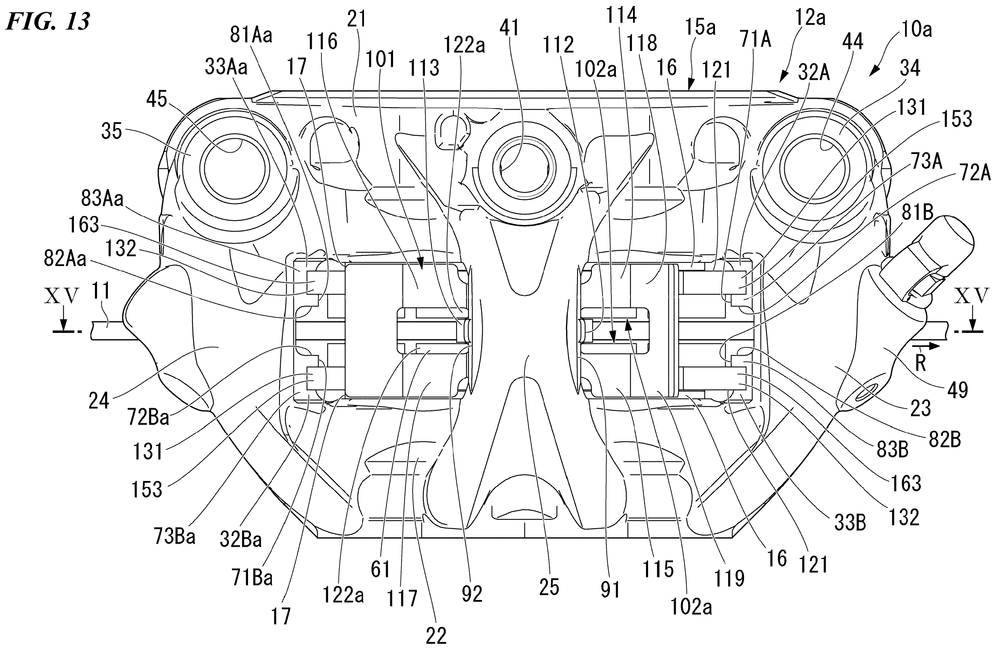

Next, a third example, which is according to the present invention will be described mainly on the basis of FIGS. 13 to 15, focusing on differences from the first example. Parts common to those in the first example are denoted by the same terms and the same reference signs.

In a disc brake 10a of the third example, as shown in FIGS. 13 to 15, instead of the caliper 12 of the first example, a caliper 12a that is partially different from the caliper 12 is used. Instead of the caliper main body 15 of the first example, the caliper 12a uses a caliper main body 15a (supporting member) that is partially different from the caliper main body 15. The caliper main body 15a includes a pad support part 32Ba, that is partially different from the pad support part 32B on the disc rotation entry side of the first example, on an inner side. The caliper main body 15a includes a pad support part 33Aa, that is partially different from the pad support part 33A on the disc rotation entry side of the first example, on an outer side.

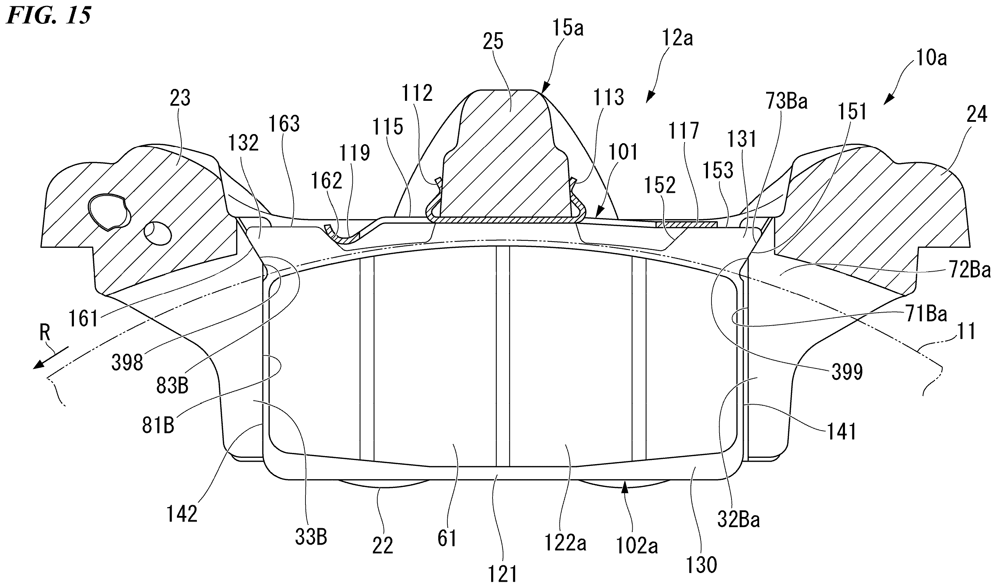

The inner pad support part 32Ba is provided to extend to an outer side in a disc radial direction with respect to the pad support part 32B of the first example. Therefore, as shown in FIG. 15, the pad support part 32Ba is provided to extend to an outer side in the disc radial direction with respect to a pad support part 33B on a disc rotation exit side. Therefore, similarly to the torque receiving surface 71B, the pad support part 32Ba includes a torque receiving surface 71Ba extending to an outer side in the disc radial direction with respect to the torque receiving surface 71B. Also, similarly to the rotor facing surface 72B, the pad support part 32Ba includes a rotor facing surface 72Ba extending to an outer side in the disc radial direction with respect to the rotor facing surface 72B. Further, similarly to the flat surface portion 73B, the pad support part 32Ba includes a flat surface portion 73Ba disposed on an outer side in the disc radial direction with respect to the flat surface portion 73B. The torque receiving surface 71Ba is parallel to a torque receiving surface 81B. An angle formed by the torque receiving surface 71Ba and the flat surface portion 73Ba is equivalent to an angle formed by the torque receiving surface 81B and a flat surface portion 83B.

Aline connecting a boundary position 398 between the flat surface portion 83B and the torque receiving surface 81B of the pad support part 33B to a boundary position 399 between the flat surface portion 73Ba and the torque receiving surface 71Ba becomes farther in distance toward the boundary position 399 side with respect to a line connecting the torque receiving surface 81B and the torque receiving surface 71Ba perpendicularly to each other. Therefore, the boundary position 399 between the flat surface portion 73Ba and the torque receiving surface 71Ba is disposed on an outer side in the disc radial direction with respect to the boundary position 398 between the flat surface portion 83B and the torque receiving surface 81B. In other words, the inner end position 399 of the flat surface portion 73Ba in the disc radial direction is disposed on an outer side in the disc radial direction with respect to the inner end position 398 of the flat surface portion 83B in the disc radial direction. In yet other words, a length of a line connecting the inner end position 399 of the flat surface portion 73Ba in the disc radial direction to a central axis of a disc rotor 11 is larger than a length of a line connecting the inner end position 398 of the flat surface portion 83B in the disc radial direction to the central axis of the disc rotor 11. The boundary position 399 between the torque receiving surface 71Ba facing a direction in which a friction pad 102a is disposed and the flat surface portion 73Ba facing outward in the disc radial direction in the pad support part 32Ba on the disc rotation entry side is disposed on an outer side in the disc radial direction with respect to the boundary position 398 between the torque receiving surface 81B facing the direction in which the friction pad 102a is disposed and the flat surface portion 83B facing outward in the disc radial direction in the pad support part 33B on the disc rotation exit side. The pad support part 32Ba and the pad support part 33B are different in that the boundary position 399 between the torque receiving surface 71Ba and the flat surface portion 73Ba and the boundary position 398 between the torque receiving surface 81B and the flat surface portion 83B on the outer side in the disc radial direction are respectively on one side and on the other side in a disc rotation direction.

Similarly, the outer pad support part 33Aa shown in FIG. 13 is provided to extend to an outer side in the disc radial direction with respect to the pad support part 33A of the first example. Therefore, the pad support part 33Aa is provided extend to the outer side in the disc radial direction with respect to the pad support part 32A on the disc rotation exit side. Therefore, similarly to the torque receiving surface 81A, the pad support part 33Aa includes a torque receiving surface 81Aa extending to the outer side in the disc radial direction with respect to the torque receiving surface 81A. Also, similarly to the rotor facing surface 82A, the pad support part 33Aa includes a rotor facing surface 82Aa extending to the outer side in the disc radial direction with respect to the rotor facing surface 82A. Also, similarly to the flat surface portion 83A, the pad support part 33Aa includes a flat surface portion 83Aa disposed on the outer side in the disc radial direction with respect to the flat surface portion 83A. The torque receiving surface 81Aa is parallel to a torque receiving surface 71A. An angle formed by the torque receiving surface 81Aa and the flat surface portion 83Aa is equivalent to an angle formed by the torque receiving surface 71A and a flat surface portion 73A. The angle formed by the torque receiving surface 81Aa and the flat surface portion 83Aa is equivalent to an angle formed by the torque receiving surface 71Ba and the flat surface portion 73Ba. The torque receiving surface 81Aa is disposed on the same plane as the torque receiving surface 71Ba. The flat surface portion 83Aa is disposed on the same plane as the flat surface portion 73Ba. A distance between the torque receiving surface 71A and the torque receiving surface 81Aa is equivalent to a distance between the torque receiving surface 71Ba and the torque receiving surface 81B.

A line connecting a boundary position between the flat surface portion 73A and the torque receiving surface 71A of the pad support part 32A to a boundary position between the flat surface portion 83Aa and the torque receiving surface 81Aa becomes farther in distance toward a boundary position side between the flat surface portion 83Aa and the torque receiving surface 81Aa with respect to a line connecting the torque receiving surface 71A and the torque receiving surface 81Aa perpendicularly to each other. Therefore, the boundary position between the flat surface portion 83Aa and the torque receiving surface 81Aa is disposed on an outer side in the disc radial direction with respect to the boundary position between the flat surface portion 73A and the torque receiving surface 71A. The boundary position between the flat surface portion 83Aa and the torque receiving surface 81Aa is aligned with the boundary position 399 between the flat surface portion 73Ba and the torque receiving surface 71Ba shown in FIG. 15 in the disc radial direction. In other words, an inner end position of the flat surface portion 83Aa in the disc radial direction is disposed on an outer side in the disc radial direction with respect to an inner end position of the flat surface portion 73A in the disc radial direction. In yet other words, a length of a line connecting the inner end position of the flat surface portion 83Aa in the disc radial direction to the central axis of the disc rotor 11 is larger than a length of a line connecting the inner end position of the flat surface portion 73A in the disc radial direction to the central axis of the disc rotor 11. The inner end position of the flat surface portion 83Aa in the disc radial direction and the inner end position 399 of the flat surface portion 73Ba in the disc radial direction are aligned in the disc radial direction. The boundary position of the pad support part 33Aa on the disc rotation entry side between the torque receiving surface 81Aa facing the direction in which the friction pad 102a is disposed and the flat surface portion 83Aa facing outward in the disc radial direction is disposed on an outer side in the disc radial direction with respect to the boundary position of the pad support part 32A on the disc rotation exit side between the torque receiving surface 71A facing the direction in which the friction pad 102a is disposed and the flat surface portion 73A facing outward in the disc radial direction. The pad support part 33Aa and the pad support part 32A are different in that the boundary position between the torque receiving surface 81Aa and the flat surface portion 83Aa and the boundary position between the torque receiving surface 71A and the flat surface portion 73A on the outer side in the disc radial direction are respectively on one side and on the other side in the disc rotation direction.

As shown in FIG. 15, in the third example, instead of the friction pad 102 of the first example the friction pad 102a which is partially different from the friction pad 102 is used. In the friction pad 102a, one lining material 122a is affixed to a back plate 121 similar to the back plate 121 of the first example.

When the friction pad 102a is assembled to the inner side of a pad disposition space 61 of the caliper main body 15a, as shown in FIG. 15, the extended part 131 is supported by the pad support part 32Ba on the forward disc rotation entry side and the extended part 132 is supported by the pad support part 33B on the forward disc rotation exit side in a posture of the friction pad 102a in which the lining material 122a is disposed on an outer side of the back plate 121 and the extended parts 131 and 132 are disposed on the outer side in the disc radial direction.

At that time, in the friction pad 102a, the extended part 132 disposed on the forward disc rotation exit side comes into contact with a bent part 119 of an extended plate part 115 of a pad spring 101 at a surface portion 162 and is pressed inward in the disc radial direction and toward the forward disc rotation exit side by the bent part 119. Thereby, the extended part 132 comes into contact with the flat surface portion 83B of the pad support part 33B at a surface portion 161. Also, in the friction pad 102a, the extended part 131 on the forward disc rotation entry side comes into contact with an extended plate part 117 of the pad spring 101 at a surface portion 153 and is pressed inward in the disc radial direction by the extended plate part 117. Thereby, the extended part 131 comes into contact with the flat surface portion 73Ba of the pad support part 32Ba at a surface portion 151.

In a state in which the friction pad 102a receives only a biasing force of the pad spring 101, the biasing force of the pad spring 101 brings a side surface portion 142 of a main plate part 130 into direct contact with the facing torque receiving surface 81B on the inner side and the forward disc rotation exit side by surface contact, brings the surface portion 161 of the extended part 132 into direct contact with the facing flat surface portion 83B on the inner side and the forward disc rotation exit side by surface contact, and brings the surface portion 151 of the extended part 131 into direct contact with the facing flat surface portion 73Ba on the inner side and the forward disc rotation entry side by surface contact.

In this state, the inner pad support part 32Ba of the caliper main body 15a includes the flat surface portion 73Ba that extends in a direction in which the extended part 131 of the inner friction pad 102a extends. In this state, the extended part 131 of the inner friction pad 102a is locked to the inner pad support part 32Ba. Also, in this state, the inner pad support part 33B of the caliper main body 15a includes the flat surface portion 83B that extends in a direction in which the extended part 132 of the inner friction pad 102a extends. In this state, the extended part 132 of the inner friction pad 102a is locked to the inner pad support part 33B. Also, in this state, the inner friction pad 102a brings the side surface portion 142 of the main plate part 130 into contact with the torque receiving surface 81B, and causes a side surface portion 141 of the main plate part 130 to face the torque receiving surface 71Ba with a slight gap therebetween. Further, in this state, the extended parts 131 and 132 of the inner friction pad 102a are disposed on an outer side in the disc radial direction with respect to an outermost circumference of the disc rotor 11.

When the friction pad 102a is assembled to the outer side of the pad disposition space 61 of the caliper main body 15a, the extended part 131 is supported by the pad support part 32A on the forward disc rotation exit side and the extended part 132 is supported by the pad support part 33Aa on the forward disc rotation entry side in a posture of the friction pad 102a in which the lining material 122a is disposed on an inner side of the back plate 121 and the extended parts 131 and 132 are disposed on the outer side in the disc radial direction.

At that time, in the friction pad 102a disposed on the outer side, the extended part 131 disposed on the forward disc rotation exit side comes into contact with a bent part 118 of an extended plate part 114 of the pad spring 101 at a surface portion 152 and is pressed inward in the disc radial direction and toward the forward disc rotation exit side by the bent part 118. Thereby, the extended part 131 comes into contact with the flat surface portion 73A of the pad support part 32A at the surface portion 151. Also, in the friction pad 102a, the extended part 132 on the forward disc rotation entry side comes into contact with an extended plate part 116 of the pad spring 101 at a surface portion 163 and is pressed inward in the disc radial direction by the extended plate part 116. Thereby, the extended part 132 comes into contact with the flat surface portion 83Aa of the pad support part 33Aa at the surface portion 161.

In a state in which the friction pad 102a disposed on the outer side receives only the biasing force of the pad spring 101, the biasing force of the pad spring 101 brings the side surface portion 141 of the main plate part 130 into direct contact with the facing torque receiving surface 71A on the outer side and the forward disc rotation exit side by surface contact, brings the surface portion 151 of the extended part 131 into direct contact with the facing flat surface portion 73A on the outer side and the forward disc rotation exit side by surface contact, and brings the surface portion 161 of the extended part 132 into direct contact with the facing flat surface portion 83Aa on the outer side and the forward disc rotation entry side by surface contact.

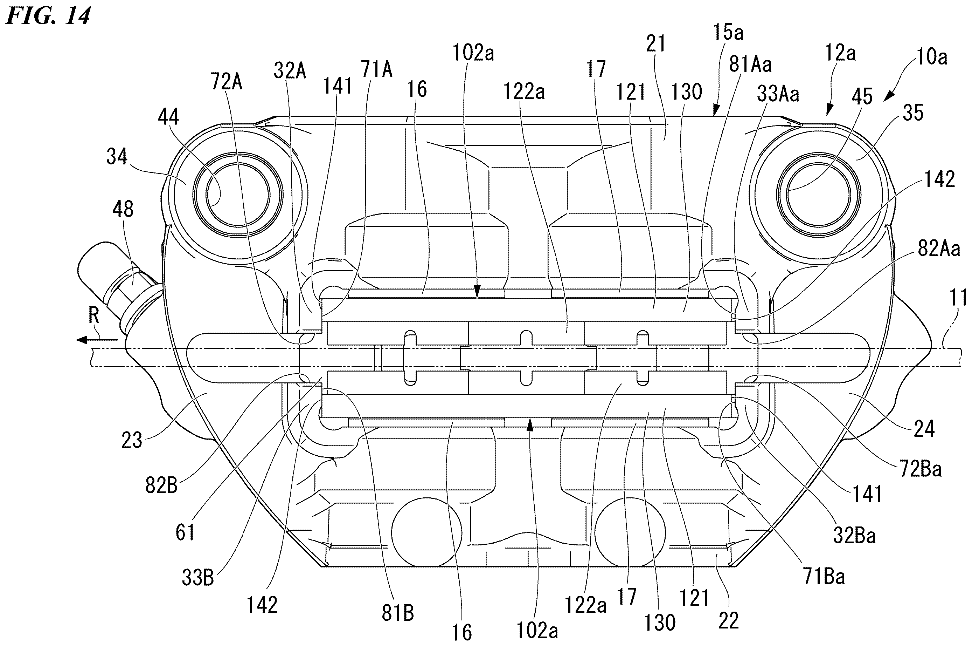

In this state, the outer pad support part 32A of the caliper main body 15a includes the flat surface portion 73A that extends in a direction in which the extended part 131 of the outer friction pad 102a extends. In this state, the extended part 131 of the outer friction pad 102a is locked to the outer pad support part 32A. Also, in this state, the outer pad support part 33Aa of the caliper main body 15a includes the flat surface portion 83Aa that extends in a direction in which the extended part 132 of the outer friction pad 102a extends. In this state, the extended part 132 of the outer friction pad 102a is locked to the outer pad support part 33Aa. Also, in this state, as shown in FIG. 14, the outer friction pad 102a brings the side surface portion 141 of the main plate part 130 into contact with the torque receiving surface 71A, and causes the side surface portion 142 of the main plate part 130 to face the torque receiving surface 81Aa with a slight gap therebetween. Further, in this state, the extended parts 131 and 132 of the outer friction pad 102a shown in FIG. 13 are disposed on an outer side in the disc radial direction with respect to the outermost circumference of the disc rotor 11. As described above, the pair of friction pads 102a are supported by one caliper main body 15a.

The inner friction pad 102a shown in FIG. 15 is supported by the inner pad support parts 32Ba and 33B of the caliper main body 15a and moves in the disc axial direction. At that time, the pad support parts 32Ba and 33B lock the extended parts 131 and 132 of the inner friction pad 102a with the flat surface portions 73Ba and 83B disposed in a V shape on both sides in the disc rotation direction.

The outer friction pad 102a shown in FIG. 13 is supported by the outer pad support parts 32A and 33Aa of the caliper main body 15a and moves in the disc axial direction. At that time, the pad support parts 32A and 33Aa lock the extended parts 131 and 132 of the outer friction pad 102a with the flat surface portions 73A and 83Aa disposed in a V shape on both sides in the disc rotation direction.

In the third example, as in the first example, at the time of braking, pistons 16 and 17 on the outer sides shown in FIG. 14 press the outer friction pad 102a against the disc rotor 11, and pistons 16 and 17 on the inner side press the inner friction pad 102a against the disc rotor 11. Then, the pair of friction pads 102a are supported by the caliper main body 15a so that inward movement in the disc radial direction and movement in the disc rotation direction are restricted by the pad support parts 32A, 33Aa, 32Ba, and 33B, and move in the disc axial direction.

When the inner friction pad 102a moves in the disc axial direction, the inner friction pad 102a shown in FIG. 15 is supported by the inner pad support parts 32Ba and 33B at the extended parts 131 and 132 and moves. At that time, the extended part 132 slides on the flat surface portion 83B of the pad support part 33B by the surface portion 161, and the extended part 131 slides on the flat surface portion 73Ba of the pad support part 32Ba by the surface portion 151. Also, at that time, the outer friction pad 102a shown in FIG. 13 is locked to the outer pad support parts 32A and 33Aa at the extended parts 131 and 132 and moves. At that time, the extended part 131 slides on the flat surface portion 73A of the pad support part 32A by the surface portion 151, and the extended part 132 slides on the flat surface portion 83Aa of the pad support part 33Aa by the surface portion 161. When the inner friction pad 102a moves in the disc axial direction, the caliper main body 15a including the pad support parts 32A, 33Aa, 32Ba, and 33B as described above supports the friction pad 102a to be movable in the disc axial direction.

At the time of forward braking of the vehicle, both the pair of friction pads 102a come into contact with the disc rotor 11 via the lining materials 122a and move to the forward disc rotation exit side. Then, as shown in FIG. 15, the inner friction pad 102a comes into contact with the torque receiving surface 81B of the pad support part 33B, which is on the forward disc rotation exit side, at the side surface portion 142 of the back plate 121. Also, as shown in FIG. 14, the outer friction pad 102a comes into contact with the torque receiving surface 71A of the pad support part 32A, which is on the forward disc rotation exit side, at the side surface portion 141 of the back plate 121. Thereby, the caliper main body 15a receives a braking torque mainly at the pad support parts 32A and 33B.

At the time of rearward braking of the vehicle, both the friction pads 102a come into contact with the disc rotor 11 via the lining materials 122a and move to a rearward disc rotation exit side. Then, the inner friction pad 102a shown in FIG. 15 comes into contact with the torque receiving surface 71Ba of the pad support part 32Ba, which is the rearward disc rotation exit side, at the side surface portion 141 of the back plate 121, and the outer friction pad 102a shown in FIG. 13 comes into contact with the torque receiving surface 81Aa of the pad support part 33Aa, which is the rearward disc rotation exit side, at the side surface portion 142 of the back plate 121. Thereby, the caliper main body 15a receives the braking torque mainly at the pad support parts 32Ba and 33Aa.

In the third example, as shown in FIG. 15, on the inner side, the flat surface portion 73Ba of the pad support part 32Ba on the forward disc rotation entry side is disposed on an outer side in the disc radial direction with respect to the flat surface portion 83B of the pad support part 33B on the forward disc rotation exit side. In other words, the flat surface portion 73Ba which is a locking surface for locking the extended part 131 of the inner friction pad 102a is disposed on an outer side in the disc radial direction with respect to the flat surface portion 83B which is a locking surface for locking the extended part 132 of the inner friction pad 102a. Thereby, even when a load of the pad spring 101 is applied to the inner friction pad 102a on the forward disc rotation exit side, the inner friction pad 102a does not easily tilt.

That is, when the flat surface portion 73Ba and the flat surface portion 83B are disposed at a position equivalent to each other in the disc radial direction, there is a possibility that the inner friction pad 102a is tilted so that the extended part 131 on the forward disc rotation entry side is positioned on an inner side in the disc radial direction with respect to the extended part 132 on the forward disc rotation exit side by the biasing force of the pad spring 101. When the tilt is made in this way, the inner friction pad 102a is tilted so that the side surface portion 142 makes line contact with the torque receiving surface 81B at a portion thereof on a side opposite to the extended part 132. In the third example, such a tilt can be suppressed and the side surface portion 142 can be brought into contact with the torque receiving surface 81B by surface contact. As a result, torque wear resistance is improved, vibration resistance is improved, and occurrence of rattle noise and brake squeal can be suppressed.

Also, on the outer side, the flat surface portion 83Aa of the pad support part 33Aa on the forward disc rotation entry side shown in FIG. 13 is disposed on an outer side in the disc radial direction with respect to the flat surface portion 73A of the pad support part 32A on the forward disc rotation exit side. In other words, the flat surface portion 83Aa which is a locking surface for locking the extended part 132 of the outer friction pad 102a is disposed on an outer side in the disc radial direction with respect to the flat surface portion 73A which is a locking surface for locking the extended part 131 of the outer friction pad 102a. Thereby, even when a load of the pad spring 101 is applied to the outer friction pad 102a on the forward disc rotation exit side, the outer friction pad 102a does not easily tilt.

That is, when the flat surface portion 83Aa and the flat surface portion 73A are disposed at a position equivalent to each other in the disc radial direction, there is a possibility that the outer friction pad 102a is tilted so that the extended part 132 on the forward disc rotation entry side is positioned on an inner side in the disc radial direction with respect to the extended part 131 on the forward disc rotation exit side by the biasing force of the pad spring 101. When the tilt is made in this way, the outer friction pad 102a is tilted so that the side surface portion 141 makes line contact with the torque receiving surface 71A at a portion on a side opposite to the extended part 131 of the side surface portion 141. In the third example, such a tilt can be suppressed and the side surface portion 141 can be brought into contact with the torque receiving surface 71A by surface contact. As a result, torque wear resistance is improved, vibration resistance is improved, and occurrence of rattle noise and brake squeal can be suppressed.

### [Modified example]

In the first and third examples, cases in which the back plates 121 of the friction pads 102 and 102a are supported by the caliper main bodies 15 and 15a at the end portions on the outer side in the disc radial direction have been described as examples. However, the back plates 121 may be supported by the caliper main bodies 15 and 15a at an intermediate portion in the disc radial direction. Also in the second example, the back plate 295 of the friction pad 205 may be supported by the bracket 215 at an intermediate portion in the disc radial direction.

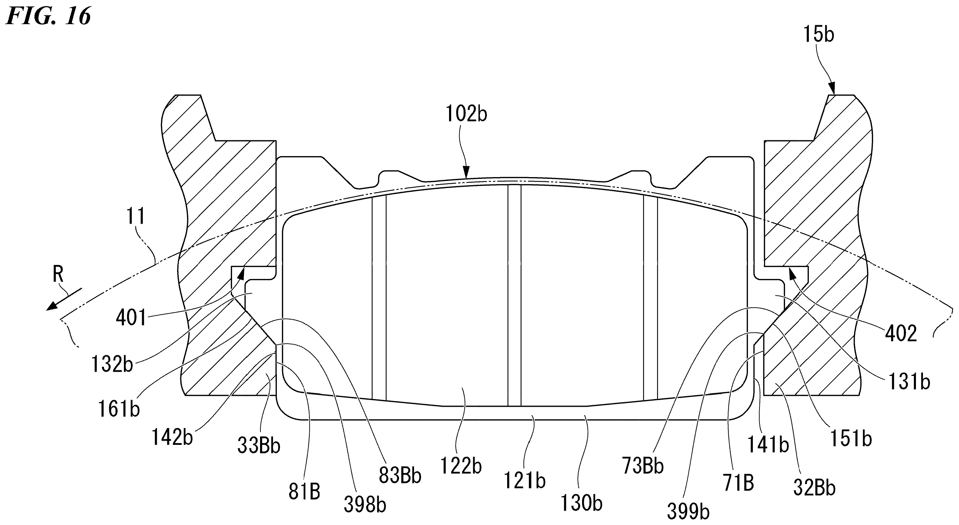

Here, portions changed on the inner side with respect to the first example will be described mainly on the basis of FIG. 16. Although description is omitted, the outer side can also be changed in the same way.

In the modified example, instead of the caliper main body 15, a caliper main body 15b (supporting member) which is partially different from the caliper main body 15 is used. In the inner side, the caliper main body 15b includes a pad support part 33Bb which is partially different from the pad support part 33B on the forward disc rotation exit side of the first example, and a pad support part 32Bb which is partially different from the pad support part 32B on the forward disc rotation entry side of the first example.

The pad support part 33Bb includes a pad locking recessed part 401. The pad locking recessed part 401 is recessed from the torque receiving surface 81B to the forward disc rotation exit side. The pad locking recessed part 401 has a flat surface portion 83Bb on an inner side in the disc radial direction. The flat surface portion 83Bb extends in the axial direction of the disc rotor 11. The flat surface portion 83Bb is inclined with respect to the first radial reference line. The flat surface portion 83Bb is inclined to become further away from the first radial reference line outward in the disc radial direction.

The pad support part 32Bb includes a pad locking recessed part 402. The pad locking recessed part 402 is recessed from the torque receiving surface 71B to the forward disc rotation entry side. The pad locking recessed part 402 has a flat surface portion 73Bb on an inner side in the disc radial direction. The flat surface portion 73Bb extends in the axial direction of the disc rotor 11. The flat surface portion 73Bb is inclined with respect to the first radial reference line. The flat surface portion 73Bb is inclined to become further away from the first radial reference line outward in the disc radial direction. An angle formed by the flat surface portion 73Bb and the torque receiving surface 71B is equivalent to an angle formed by the flat surface portion 83Bb and the torque receiving surface 81B.

The pad locking recessed part 401 on the forward disc rotation entry side is provided on an outer side in the disc radial direction with respect to the pad locking recessed part 402 on the forward disc rotation exit side. Therefore, the pad support part 32Bb includes the flat surface portion 73Bb disposed on an outer side with respect to the flat surface portion 83Bb in the disc radial direction.

A line connecting a boundary position 398b between the flat surface portion 83Bb and the torque receiving surface 81B of the pad support part 33Bb to a boundary position 399b between the flat surface portion 73Bb and the torque receiving surface 71B becomes farther in distance toward the boundary position 399b side with respect to a line connecting the torque receiving surface 81B and the torque receiving surface 71B perpendicularly to each other on an inner side in the disc radial direction with respect to the pad locking recessed parts 401 and 402. Therefore, the boundary position 399b between the flat surface portion 73Bb and the torque receiving surface 71B is disposed on an outer side in the disc radial direction with respect to the boundary position 398b between the flat surface portion 83Bb and the torque receiving surface 81B. In other words, the inner end position 399b of the flat surface portion 73Bb in the disc radial direction is disposed on an outer side in the disc radial direction with respect to the inner end position 398b of the flat surface portion 83Bb in the disc radial direction. In yet other words, a length of a line connecting the inner end position 399b of the flat surface portion 73Bb in the disc radial direction to the central axis of the disc rotor 11 is larger than a length of a line connecting the inner end position 398b of the flat surface portion 83Bb in the disc radial direction to the central axis of the disc rotor 11.

In the third example, instead of the friction pad 102 of the first example, a friction pad 102b that is partially different from the friction pad 102 is used. In the friction pad 102b, one lining material 122b is affixed to a back plate 121b which is partially different from the back plate 121 of the first example.

The back plate 121b includes a main plate part 130b to which the lining material 122b is affixed, and a pair of an extended part 131b and an extended part 132b which extends to both outer sides in the disc rotation direction from intermediate positions in the disc radial direction on both end portion sides of the main plate part 130b in the disc rotation direction. The extended part 131b and the extended part 132b extend in a direction inclined with respect to a longitudinal direction of the main plate part 130b from both end portion sides of the main plate part 130b in the disc rotation direction which are on both sides thereof in the longitudinal direction. The longitudinal direction of the main plate part 130b is a longitudinal direction of the back plate 121b and a longitudinal direction of the friction pad 102b. Therefore, the pair of extended parts 131b and 132b extending in a direction inclined with respect to the longitudinal direction of the friction pad 102b are formed in the back plate 121b at intermediate portions in the disc radial direction on both end portion sides in the disc rotation direction. In the back plate 121b, the main plate part 130b has a mirror-symmetrical outer shape. In the back plate 121b, shapes of the extended part 131b and the extended part 132b are mirror symmetrical.

The extended part 131b on one side includes a surface portion 151b (facing surface portion) on an inner side in the disc radial direction. The surface portion 151b (facing surface portion) extends in a direction away from the main plate part 130b in the longitudinal direction of the main plate part 130b from an intermediate portion of the main plate part 130b in the disc radial direction on one end portion side thereof in the disc rotation direction. The surface portion 151b of the extended part 131b is inclined such that it is positioned further outward in the disc radial direction in the first reference line direction toward an extended distal end side.

The extended part 132b on the other side includes a surface portion 161b (facing surface portion) on an inner side in the disc radial direction. The surface portion 161b (facing surface portion) extends in a direction away from the main plate part 130b in the longitudinal direction of the main plate part 130b from an intermediate portion of the main plate part 130b in the disc radial direction on the other end portion side thereof in the disc rotation direction. The surface portion 161b of the extended part 132b is inclined such that it is positioned further outward in the disc radial direction in the first reference line direction toward an extended distal end side.

The main plate part 130b includes a side surface portion 141b which is a flat surface extending perpendicular to the longitudinal direction of the main plate part 130b on one side thereof in the longitudinal direction which is a base position of the extended part 131b. The main plate part 130b includes a side surface portion 142b which is a flat surface extending perpendicular to the longitudinal direction of the main plate part 130b on the other side thereof in the longitudinal direction which is a base position of the extended part 132b.

The surface portion 151b extends outward in the disc radial direction and outward in the disc rotation direction obliquely with respect to the longitudinal direction of the friction pad 102b and the first reference line direction from an intermediate portion of the side surface portion 141b in the disc radial direction. The surface portion 151b and the side surface portion 141b form an obtuse angle. The angle formed by the surface portion 151b and the side surface portion 141b is equivalent to an angle formed by the flat surface portion 73Bb and the torque receiving surface 71B of the pad support part 32Bb.

The surface portion 161b extends outward in the disc radial direction and outward in the disc rotation direction obliquely with respect to the longitudinal direction of the friction pad 102b and the first reference line direction from an intermediate portion of the side surface portion 142b in the disc radial direction. The surface portion 161b and the side surface portion 142b form an obtuse angle. The angle formed by the surface portion 161b and the side surface portion 142b is equivalent to an angle formed by the surface portion 151b and the side surface portion 141b. The angle formed by the surface portion 161b and the side surface portion 142b is equivalent to an angle formed by the flat surface portion 83Bb and the torque receiving surface 81B of the pad support part 33Bb. A line connecting a boundary position between the surface portion 161b and the side surface portion 142b to a boundary position between the surface portion 151b and the side surface portion 141b is parallel to a line connecting the side surface portion 141b and the side surface portion 142b perpendicularly to each other. A distance between the side surface portion 141b and the side surface portion 142b is smaller than a distance between the torque receiving surface 71B and the torque receiving surface 81B. A maximum distance between the surface portion 151b and the surface portion 161b is larger than a distance between the torque receiving surface 71B and the torque receiving surface 81B.

When the friction pad 102b is assembled to the inner side of the caliper main body 15b, the extended part 131b is supported by the pad locking recessed part 402 of pad support part 32Bb on the forward disc rotation entry side in a posture of the friction pad 102b in which the lining material 122b is disposed on an outer side of the back plate 121b and the surface portions 151b and 161b are disposed on an inner side in the disc radial direction in the extended parts 131b and 132b. Also, the extended part 132b is supported by the pad locking recessed part 401 of the pad support part 33B on the forward disc rotation exit side.

At that time, the forward disc rotation exit side of the friction pad 102b disposed on the inner side is pressed inward in the disc radial direction and the forward disc rotation exit side by the pad spring (not shown). Thereby, the extended part 132b comes into contact with the flat surface portion 83Bb of the pad support part 33Bb at the surface portion 161b thereof. Also, the forward disc rotation entry side of the friction pad 102b is pressed inward in the disc radial direction by the pad spring (not shown). Thereby, the extended part 131b comes into contact with the flat surface portion 73Bb of the pad support part 32Bb at the surface portion 151b thereof.

In a state in which the friction pad 102b disposed on the inner side receives only a biasing force of the pad spring, the biasing force of the pad spring brings the side surface portion 142b of the main plate part 130b into direct contact with the facing torque receiving surface 81B on the inner side and the forward disc rotation exit side by surface contact, brings the surface portion 161b of the extended part 132b into direct contact with the facing flat surface portion 83Bb on the inner side and the forward disc rotation exit side by surface contact, and brings the surface portion 151b of the extended part 131b into direct contact with the facing flat surface portion 73Bb on the inner side and the forward disc rotation entry side by surface contact.

In this state, the inner pad support part 32Bb of the caliper main body 15b includes the flat surface portion 73Bb that extends in a direction in which the surface portion 151b of the extended part 131b of the inner friction pad 102b extends. In this state, the extended part 131b of the inner friction pad 102b is locked to the inner pad support part 32Bb. Also, in this state, the inner pad support part 33Bb of the caliper main body 15b includes the flat surface portion 83Bb that extends in a direction in which the surface portion 161b of the extended part 132b of the inner friction pad 102b extends. In this state, the extended part 132b of the inner friction pad 102b is locked to the inner pad support part 33Bb. Also, in this state, the inner friction pad 102b brings the side surface portion 142b of the main plate part 130b into contact with the torque receiving surface 81B, and causes the side surface portion 141b of the main plate part 130b to face the torque receiving surface 71B with a slight gap therebetween.

The inner friction pad 102b is supported by the inner pad support parts 32Bb and 33Bb of the caliper main body 15b and moves in the disc axial direction. At that time, the pad support parts 32Bb and 33Bb lock the extended parts 131b and 132b of the inner friction pad 102b with the flat surface portions 73Bb and 83Bb disposed in a V shape on both sides in the disc rotation direction.

When the inner friction pad 102b moves in the disc axial direction, it is supported by the inner pad support parts 32Bb and 33Bb at the extended parts 131b and 132b and moves. At that time, the extended part 132b slides on the flat surface portion 83Bb of the pad support part 33Bb by the surface portion 161b, and the extended part 131b slides on the flat surface portion 73Bb of the pad support part 32Bb by the surface portion 151b. When the friction pad 102b moves in the disc axial direction, the caliper main body 15b including the pad support parts 32Bb and 33Bb as described above supports the friction pad 102b to be movable in the disc axial direction.

At the time of forward braking of the vehicle, the inner friction pad 102b comes into contact with the disc rotor 11 via the lining material 122b and moves to the forward disc rotation exit side. Then, the friction pad 102b comes into contact with the torque receiving surface 81B of the pad support part 33Bb, which is on the forward disc rotation exit side, at the side surface portion 142b of the back plate 121b. Thereby, the caliper main body 15b receives a braking torque of the inner friction pad 102b mainly at the pad support part 33Bb.

At the time of rearward braking of the vehicle, the inner friction pad 102b comes into contact with the disc rotor 11 via the lining material 122b and moves to the rearward disc rotation exit side. Then, the friction pad 102b comes into contact with the torque receiving surface 71B of the pad support part 32Bb, which is on the rearward disc rotation exit side, at the side surface portion 141b of the back plate 121b. Thereby, the caliper main body 15b receives a braking torque of the inner friction pad 102b mainly at the pad support part 32Bb.

On the inner side, the flat surface portion 73Bb of the pad support part 32Bb on the forward disc rotation entry side is disposed on an outer side in the disc radial direction with respect to the flat surface portion 83Bb of the pad support part 33Bb on the forward disc rotation exit side. In other words, the flat surface portion 73Bb which is a locking surface for locking the extended part 131b of the inner friction pad 102b is disposed on an outer side in the disc radial direction with respect to the flat surface portion 83Bb which is a locking surface for locking the extended part 132b of the inner friction pad 102b. Thereby, even when a load of the pad spring is applied to the inner friction pad 102b on the forward disc rotation exit side, the inner friction pad 102b does not easily tilt.

That is, when the flat surface portion 73Bb and the flat surface portion 83Bb are disposed at a position equivalent to each other in the disc radial direction, there is a possibility that the inner friction pad 102b is tilted so that the extended part 131b on the forward disc rotation entry side is positioned on an inner side in the disc radial direction with respect to the extended part 132b on the forward disc rotation exit side by the biasing force of the pad spring. When the tilt is made in this way, the inner friction pad 102b is tilted so that the side surface portion 142b makes line contact with the torque receiving surface 81B at a portion thereof on the inner side in the disc radial direction. In the modified example, such a tilt can be suppressed, and the side surface portion 142b can be brought into contact with the torque receiving surface 81B by surface contact. As a result, torque wear resistance is improved, vibration resistance is improved, and occurrence of rattle noise and brake squeal can be suppressed.

### [Industrial Applicability]

According to the disc brake and the caliper described above, costs can be reduced.

### [Reference Signs List]

10, 10a, 200 Disc brake
11, 201 Disc rotor
15, 15a, 15b Caliper main body (supporting member)
16, 17, 251 Piston (pressing member)
21, 22 Cylinder part
23, 24 End side connection part (connection part)
32A, 32B, 32Ba, 32Bb, 33A, 33Aa, 33B, 33Bb, 261, 262 Pad support part
73A, 73B, 73Ba, 73Bb, 83A, 83Aa, 83B, 83Bb, 273, 283 Flat surface portion
102, 102a, 102b, 205 Friction pad
121, 121b, 295 Back plate
122, 122a, 122b, 123, 296 Lining material
131, 131b, 132, 132b, 301 Extended part
151, 151b, 161, 161b, 351 Surface portion (facing surface portion)
215 Bracket (supporting member)
250 Caliper main body (pressing member)

## Claims

1. A disc brake (10;10a;200) comprising:
a supporting member which supports a friction pad (102, 102a, 102b, 205) to be movable in a disc axial direction; and
a pressing member (16, 17, 251) which presses the friction pad (102, 102a, 102b, 205) against a disc rotor (11;201), wherein:
the friction pad (102, 102a, 102b, 205) includes
a lining material (122, 122a, 122b, 123, 296) which comes into contact with the disc rotor (11, 201); and
a back plate (121, 121b, 295) to which the lining material is affixed;
an extended part (131;132) extending in a direction inclined with respect to a longitudinal direction of the friction pad (102, 102a, 102b, 205) is formed in the back plate (121, 121b, 295) on an end portion side in a disc rotation direction;
the supporting member includes a pad support part (32A, 32B, 32Ba, 32Bb, 33A, 33Aa, 33B, 33Bb, 261, 262) having a flat surface portion (73 A, 73B, 73Ba, 73Bb, 83A, 83 Aa, 83B, 83Bb, 273, 283) extending in a direction in which the extended part (131, 132) extends; the extended part (131, 132) is supported by the pad support part (32A, 32B, 32Ba, 32Bb, 33A, 33Aa, 33B, 33Bb, 261, 262); and **characterized in that** the pad support part (32A, 32B, 32Ba, 32Bb, 33A, 33Aa, 33B, 33Bb, 261, 262) on a disc rotation entry side is disposed on an outer side in the disc radial direction with respect to the pad support part (32A, 32B, 32Ba, 32Bb, 33A, 33Aa, 33B, 33Bb, 261, 262) on a disc rotation exit side.

2. The disc brake according to claim 1, wherein
the extended part (131, 132) of the friction pad (102, 102a, 102b, 205) is disposed on an outer side in a disc radial direction with respect to an outermost circumference of the disc rotor (11, 201).

3. The disc brake according to claim 1 or 2, wherein
the flat surface portion (73 A, 73B, 73Ba, 73Bb, 83A, 83 Aa, 83B, 83Bb, 273, 283) of the pad support part (32A, 32B, 32Ba, 32Bb, 33A, 33Aa, 33B, 33Bb, 261, 262) comes into direct contact with a facing surface portion of the extended part (131, 132) facing the flat surface portion (73 A, 73B, 73Ba, 73Bb, 83A, 83 Aa, 83B, 83Bb, 273, 283).

4. The disc brake according to any one of claims 1 to 3, wherein:
a pair of the friction pads are supported by the supporting member;
the supporting member includes
a pair of cylinder parts (21, 22) in which pistons as the pressing member are accommodated and disposed to face each other, and
a pair of connection parts (23, 24) which connect the pair of cylinder parts across the disc rotor at end portions of the pair of cylinder parts in the disc rotation direction; and
the pad support part (32A, 32B, 32Ba, 32Bb, 33A, 33Aa, 33B, 33Bb, 261, 262) is provided in each of the connection parts (23, 24). ports

5. The disc brake according to claim 4, wherein
the supporting member is configured so that the flat surface portion (73 A, 73B, 73Ba, 73Bb, 83A, 83 Aa, 83B, 83Bb, 273, 283) of the pad support part (32A, 32B, 32Ba, 32Bb, 33A, 33Aa, 33B, 33Bb, 261, 262) which supports the extended part (131, 132) of the friction pad (102, 102a, 102b, 1205) on one side is continuous in the disc axial direction with the flat surface portion (73 A, 73B, 73Ba, 73Bb, 83A, 83 Aa, 83B, 83Bb, 273, 283) of the pad support part (32A, 32B, 32Ba, 32Bb, 33A, 33Aa, 33B, 33Bb, 261, 262) which supports the extended part (131, 132) of the friction pad (102, 102a, 102b, 205) on the other side.

6. The disc brake according to claim 1, wherein
a boundary position of the pad support part (32A, 32B, 32Ba, 32Bb, 33A, 33Aa, 33B, 33Bb, 261, 262) on the disc rotation entry side between a torque receiving surface facing a direction in which the friction pad (102, 102a, 102b, 205) is disposed and a flat surface portion (73A) facing outward in the disc radial direction is disposed on an outer side in the disc radial direction with respect to
a boundary position of the pad support part (32A, 32B, 32Ba, 32Bb, 33A, 33Aa, 33B, 33Bb, 261, 262) on the disc rotation exit side between a torque receiving surface (71A) facing a direction in which the friction pad (102, 102a, 102b, 205) is disposed and a flat surface portion (73 A, 73B, 73Ba, 73Bb, 83A, 83 Aa, 83B, 83Bb, 273, 283) facing outward in the disc radial direction.

## Patentansprüche

1. Scheibenbremse (10;10a;200), umfassend:
ein Stützelement, das einen Bremsbelag (102, 102a, 102b, 205) so stützt, dass der Bremsbelag in einer axialen Richtung der Scheibe beweglich ist; und
ein Andrückelement (16, 17, 251), das den Bremsbelag (102, 102a, 102b, 205) gegen einen Scheibenrotor (11; 201) drückt, wobei:
der Bremsbelag (102, 102a, 102b, 205) einschließt
ein Reibmaterial (122, 122a, 122b, 123, 296), das mit dem Scheibenrotor (11, 201) in Kontakt kommt; und
eine Rückenplatte (121, 121b, 295), an der das Reibmaterial befestigt ist;
ein Verlängerungsteil (131; 132), das sich in einer gegenüber einer Längsrichtung des Bremsbelags (102, 102a, 102b, 205) geneigten Richtung erstreckt, das in der Rückenplatte (121, 121b, 295) an einer Endabschnittsseite in einer Scheibenrotationsrichtung gebildet ist;
das Stützelement einen Belagstützteil (32A, 32B, 32Ba, 32Bb, 33A, 33Aa, 33B, 33Bb, 261, 262) einschließt, der einen Flachflächenabschnitt (73A, 73B, 73Ba, 73Bb, 83A, 83Aa, 83B, 83Bb, 273, 283) aufweist, der sich in einer Richtung erstreckt, in der sich das Verlängerungsteil (131, 132) erstreckt; wobei das Verlängerungsteil (131, 132) von dem Belagstützteil (32A, 32B, 32Ba, 32Bb, 33A, 33Aa, 33B, 33Bb, 261, 262) abgestützt ist; und **dadurch gekennzeichnet, dass** der Belagstützteil (32A, 32B, 32Ba, 32Bb, 33A, 33Aa, 33B, 33Bb, 261, 262) an einer Scheibenrotationseinlaufseite auf einer äußeren Seite in der radialen Richtung der Scheibe gegenüber dem Belagstützteil (32A, 32B, 32Ba, 32Bb, 33A, 33Aa, 33B, 33Bb, 261, 262) an einer Scheibenrotationsauslaufseite angeordnet ist.

2. Scheibenbremse nach Anspruch 1, wobei
das Verlängerungsteil (131, 132) des Bremsbelags (102, 102a, 102b, 205) auf einer äußeren Seite in einer radialen Richtung gegenüber einem äußersten Umfangsrand des Scheibenrotors (11, 201) angeordnet ist.

3. Scheibenbremse nach Anspruch 1 oder 2, wobei
der Flachflächenabschnitt (73A, 73B, 73Ba, 73Bb, 83A, 83Aa, 83B, 83Bb, 273, 283) des Belagstützteils (32A, 32B, 32Ba, 32Bb, 33A, 33Aa, 33B, 33Bb, 261, 262) in direkten Kontakt mit einem dem Flachflächenabschnitt (73A, 73B, 73Ba, 73Bb, 83A, 83Aa, 83B, 83Bb, 273, 283) zugewandten Oberflächenabschnitt des Verlängerungsteils (131, 132) kommt.

4. Scheibenbremse nach einem der Ansprüche 1 bis 3, wobei:
ein Paar der Bremsbeläge durch das Stützelement abgestützt ist;
das Stützelement einschließt
ein Paar von Zylinderteilen (21, 22), in denen Kolben als das Andrückelement aufgenommen sind und einander gegenüber angeordnet sind, und
ein Paar von Verbindungsteilen (23, 24), das das Paar von Zylinderteilen an Endabschnitten des Paares von Zylinderteilen in einer Scheibenrotationsrichtung über den Scheibenrotor hinweg verbindet; und
das Belagstützteil (32A, 32B, 32Ba, 32Bb, 33A, 33Aa, 33B, 33Bb, 261, 262) in jedem der Verbindungsteile (23, 24) bereitgestellt ist.

5. Scheibenbremse nach Anspruch 4, wobei
das Stützelement so ausgebildet ist, dass der Flachflächenabschnitt (73A 73B, 73Ba, 73Bb, 83A, 83Aa, 83B, 83Bb, 273, 283) des Belagstützteils (32A, 32B, 32Ba, 32Bb, 33A, 33Aa, 33B, 33Bb, 261, 262), der das Verlängerungsteil (131, 132) des Bremsbelags (102, 102a, 102b, 1205) auf einer Seite abstützt, in der axialen Richtung der Scheibe mit dem Flachflächenabschnitt (73A, 73B, 73Ba, 73Bb, 83A, 83Aa, 83B, 83Bb, 273, 283) des Belagstützteils (32A, 32B, 32Ba, 32Bb, 33A, 33Aa, 33B, 33Bb, 261, 262), der das Verlängerungsteil (131, 132) des Bremsbelags (102, 102a, 102b, 205) auf der anderen Seite abstützt, durchgehend ist.

6. Scheibenbremse nach Anspruch 1, wobei
eine Grenzposition oder das Belagstützteil (32A, 32B, 32Ba, 32Bb, 33A, 33Aa, 33B, 33Bb, 261, 262) an der Scheibenrotationseinlaufseite zwischen einer Drehmomentaufnahmfläche, die einer Richtung zugewandt ist, in der der Bremsbelag (102, 102a, 102b, 205) angeordnet ist, und einem Flachflächenabschnitt (73A), der in der radialen Richtung der Scheibe nach außen weist, auf einer äußeren Seite in der radialen Richtung der Scheibe gegenüber einer Grenzposition des Belagstützteils (32A, 32B, 32Ba, 32Bb, 33A, 33Aa, 33B, 33Bb, 261, 262) an der Scheibenrotationsauslaufseite zwischen einer Drehmomentaufnahmfläche (71A), die einer Richtung zugewandt ist, in der der Bremsbelag (102, 102a, 102b, 205) angeordnet ist, und einem Flachflächenabschnitt (73A, 73B, 73Ba, 73Bb, 83A, 83Aa, 83B, 83Bb, 273, 283), der in der radialen Richtung der Scheibe nach außen weist, angeordnet ist.

## Revendications

1. Frein à disque (10 ; 10a ; 200) comprenant :
un organe de support, qui supporte une garniture de friction (102, 102a, 102b, 205) pour être mobile dans une direction axiale de disque ; et
un organe de pression (16, 17, 251), qui presse la garniture de friction (102, 102a, 102b, 205) contre un rotor de disque (11 ; 201), dans lequel :
la garniture de friction (102, 102a, 102b, 205) inclut
un matériau de revêtement (122, 122a, 122b, 123, 296), qui vient en contact avec le rotor (11, 201) de disque ; et
une plaque arrière (121, 121b, 295), à laquelle le matériau de revêtement est fixé ;
une partie étendue (131 ; 132), s'étendant dans une direction inclinée par rapport à une direction longitudinale de la garniture de friction (102, 102a, 102b, 205) est formée dans la plaque arrière (121, 121b, 295) sur un côté partie d'extrémité dans une direction de rotation de disque ;
l'organe de support inclut une partie de support (32A, 32B, 32Ba, 32Bb, 33A, 33Aa, 33B, 33Bb, 261, 262) de garniture, présentant une partie de surface plane (73A, 73B, 73Ba, 73Bb, 83A, 83Aa, 83B, 83Bb, 273, 283) s'étendant dans une direction selon laquelle la partie étendue (131, 132) s'étend ; la partie étendue (131, 132) est supportée par la partie de support (32A, 32B, 32Ba, 32Bb, 33A, 33Aa, 33B, 33Bb, 261, 262) de garniture ; et **caractérisé en ce que** la partie de support (32A, 32B, 32Ba, 32Bb, 33A, 33Aa, 33B, 33Bb, 261, 262) de garniture sur un côté d'entrée de rotation de disque est disposée sur un côté extérieur dans la direction radiale de disque par rapport à la partie de support (32A, 32B, 32Ba, 32Bb, 33A, 33Aa, 33B, 33Bb, 261, 262) de garniture sur un côté de sortie de rotation de disque.

2. Frein à disque selon la revendication 1, dans lequel
la partie étendue (131, 132) de la garniture de friction (102, 102a, 102b, 205) est disposée sur un côté extérieur dans une direction radiale de disque par rapport à une circonférence la plus externe du rotor (11, 201) de disque.

3. Frein à disque selon la revendication 1 ou la revendication 2, dans lequel
la partie de surface plane (73A, 73B, 73Ba, 73Bb, 83A, 83Aa, 83B, 83Bb, 273, 283) de la partie de support (32A, 32B, 32Ba, 32Bb, 33A, 33Aa, 33B, 33Bb, 261, 262) de garniture vient en contact direct avec une partie de surface opposée de la partie étendue (131, 132) située en face de la partie de surface plane (73A, 73B, 73Ba, 73Bb, 83A, 83Aa, 83B, 83Bb, 273, 283).

4. Frein à disque selon l'une quelconque des revendications 1 à 3, dans lequel :
une paire des garnitures de friction est supportée par l'organe de support ;
l'organe de support inclut
une paire de pièces cylindriques (21, 22) dans lesquelles des pistons en tant qu'organe de pression sont logés et disposés l'un en face de l'autre, et
une paire de pièces de liaison (23, 24) qui relient la paire de pièces cylindriques à travers le rotor de disque au niveau de parties d'extrémités de la paire de pièces cylindriques dans la direction de rotation de disque ; et
la partie de support (32A, 32B, 32Ba, 32Bb, 33A, 33Aa, 33B, 33Bb, 261, 262) de garniture est prévue dans chacune des pièces de liaison (23, 24).

5. Frein à disque selon la revendication 4, dans lequel
l'organe de support est configuré de manière à ce que la partie de surface plane (73A, 73B, 73Ba, 73Bb, 83A, 83Aa, 83B, 83Bb, 273, 283) de la partie de support (32A, 32B, 32Ba, 32Bb, 33A, 33Aa, 33B, 33Bb, 261, 262) de garniture qui supporte la partie étendue (131, 132) de la garniture de friction (102, 102a, 102b, 1205) d'un côté soit continue dans la direction axiale de disque avec la partie de surface plane (73A, 73B, 73Ba, 73Bb, 83A, 83Aa, 83B, 83Bb, 273, 283) de la partie de support (32A, 32B, 32Ba, 32Bb, 33A, 33Aa, 33B, 33Bb, 261, 262) de garniture qui supporte la partie étendue (131, 132) de la garniture de friction (102, 102a, 102b, 205) de l'autre côté.

6. Frein à disque selon la revendication 1, dans lequel
une position limite de la partie de support (32A, 32B, 32Ba, 32Bb, 33A, 33Aa, 33B, 33Bb, 261, 262) de garniture sur le côté d'entrée de rotation de disque entre une surface de réception de couple orientée dans une direction dans laquelle la garniture de friction (102, 102a, 102b, 205) est disposée et une partie de surface plane (73A) orientée vers l'extérieur dans la direction radiale de disque est disposée sur un côté extérieur dans la direction radiale de disque par rapport à une position limite de la partie de support (32A, 32B, 32Ba, 32Bb, 33A, 33Aa, 33B, 33Bb, 261, 262) de garniture sur le côté de sortie de rotation de disque, entre une surface de réception de couple (71A) orientée dans une direction dans laquelle la garniture de friction (102, 102a, 102b, 205) est disposée et une partie de surface plane (73A, 73B, 73Ba, 73Bb, 83A, 83Aa, 83B, 83Bb, 273, 283) orientée vers l'extérieur dans la direction radiale de disque.
